# EUROPEAN PATENT APPLICATION

(11) **EP 4 835 464 A2**
(43) Date of publication of application: **04.11.2026**
(21) Application number: 26205641.9
(22) Date of filing: 29.05.2024
(51) Int. Cl.: G01N 29/22

(54) **ACOUSTIC INSPECTION DEVICE AND METHODS OF OPERATION**

(30) Priority: 01.06.2023 US 202363470360 P; 27.09.2023 US 202363540737 P
(62) Document number(s) of the earlier application(s) in accordance with Art. 76 EPC: 24178926.2 / 4 471 421
(71) Applicant: General Electric Company, Cincinnati, Ohio 45215 (US)
(72) Inventor: KLAASSEN, Richard Eugene, Springdale, 45246 (US); WOODFIELD, Andrew Philip, Schenectady, 12345 (US); NGUYEN, Luc The, Springdale, 45246 (US); SHARP II, William Andrew, Schenectady, 12345 (US); VAN ZANDT, Nicholas Lee, Springdale, 45246 (US)
(74) Representative: Openshaw & Co.

(57) **Abstract**

Acoustic inspection systems and methods are described herein useful to determining microstructural characteristics, such as microtexture regions (MTRs), of a material sample (102, 160, 180, 202). In some embodiments, a method of determining a material characteristic (126) of a material sample (102, 160, 180, 202) includes transmitting acoustic waves (224, 226, 254) from transducer (106, 152, 172, 190) having a concave face (156, 174, 194) that includes one or more piezoelectric elements through a coupling medium (109) and to a surface of a material sample (102, 160, 180, 202) to produce surface acoustic waves (224, 226, 254) along a portion of a surface of the material sample (102, 160, 180, 202). The one or more piezoelectric elements of the concave face (156, 174, 194) may operate as at least one of an acoustic transmitter or an acoustic receiver. The method also includes receiving the surface acoustic waves (224, 226, 254) reflected from the surface of the material sample (102, 160, 180, 202) at the concave face (156, 174, 194). The method then includes determining at least one material characteristic (126) of the material sample (102, 160, 180, 202) based on a property of the surface acoustic waves (224, 226, 254).

## Description

### CROSS-REFERENCE TO RELATED APPLICATIONS

This application claims the benefit of U.S. Provisional Application No. 63/540,737, filed September 27, 2023, and U.S. Provisional Application No. 63/470,360, filed June 1, 2023, which are incorporated herein by reference in their entirety.

### TECHNICAL FIELD

These teachings relate generally to systems and methods for inspecting components and, more particularly, to acoustic inspection devices and methods of operation thereof.

### BACKGROUND

Components in a variety of industries may be inspected for characteristics or features that may affect component properties, performance, or expected life. In the aviation industry, various components may be formed from metal alloys, such as titanium alloys. Certain metal alloys, however, may include microstructures such as micro-texture regions (MTR) that may reduce the performance of components formed from the alloys. Thus, it may be useful to have inspection devices and methods to assess the microstructural characteristics of such materials.

### BRIEF DESCRIPTION OF DRAWINGS

Various needs are at least partially met through the provision of the acoustic inspection device and methods of operation described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic diagram of an inspection system, in accordance with some embodiments;
FIG. 2A is a schematic diagram of an inspection device including a transducer, in accordance with some embodiments;
FIG. 2B is a schematic diagram of an end of the transducer of FIG. 2A;
FIG. 2C is a schematic diagram of scans performed by the inspection device of FIG. 2A at different sound path angles;
FIG. 3A is a schematic diagram of an alternative inspection device having a transducer, in accordance with some embodiments;
FIG. 3B is a schematic diagram of a bottom end of the transducer of FIG. 3A;
FIG. 4A is a side view of an inspection device including a mask, in accordance with some embodiments;
FIG. 4B is a perspective view of the inspection device of FIG. 4A;
FIGS. 5A, 5B, 5C, and 5D are a flow diagram of a method of inspecting a material sample, in accordance with some embodiments;
FIG. 6A is a schematic diagram of acoustic waves passing through two different crystal structures;
FIG. 6B is a graph of the acoustic signals from the acoustic waves of FIG. 6A;
FIGS. 7A and 7B are schematic diagrams of surface waves scanning a sample;
FIG. 8 is a flow diagram of a method of inspecting a component in accordance with some embodiments;
FIG. 9 is a flow diagram of an inspection method in accordance with some embodiments;
FIG. 10A is an exemplary C-scan image of a material sample;
FIG. 10B is an exemplary C-scan image of a material sample;
FIG. 11A is a graph showing a correlation between acoustic scores and MTR values for a plurality of material samples;
FIG. 11B is a graph showing a correlation between acoustic scores and MTR values for a plurality of material samples; and
FIG. 11C is a graph showing a correlation between acoustic scores and MTR values for a plurality of material samples.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. While certain actions and/or steps may be described or depicted in a particular order of occurrence, those skilled in the art will understand that such specificity with respect to sequence is not actually required.

### DETAILED DESCRIPTION

In some instances, determining the microstructural characteristics of a component involves destructive testing such as electron backscatter diffraction (EBSD). In general, material samples for EBSD testing are also highly prepared and, for example, may involve polishing the samples to a mirror finish. Generally speaking, the various aspects of the present disclosure illustrate nondestructive approaches for detecting microstructural characteristics of a component formed from a material having a crystalline structure. Nondestructive inspection may assess a component while avoiding damage to the component during the inspection process. Because non-destructive inspection does not damage the component, the component can still be used after inspection and may be placed back in operation, reducing costs. Further, the acoustic inspection systems and methods described herein may be performed on a simple surface that is not highly prepared (e.g., does not need to be polished to a mirror finish) and can evaluate peened and machined surfaces.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring a value, or the precision of the methods or machines for constructing or manufacturing the components and/or systems. For example, the approximating language may refer to being within a factor of 2 margin.

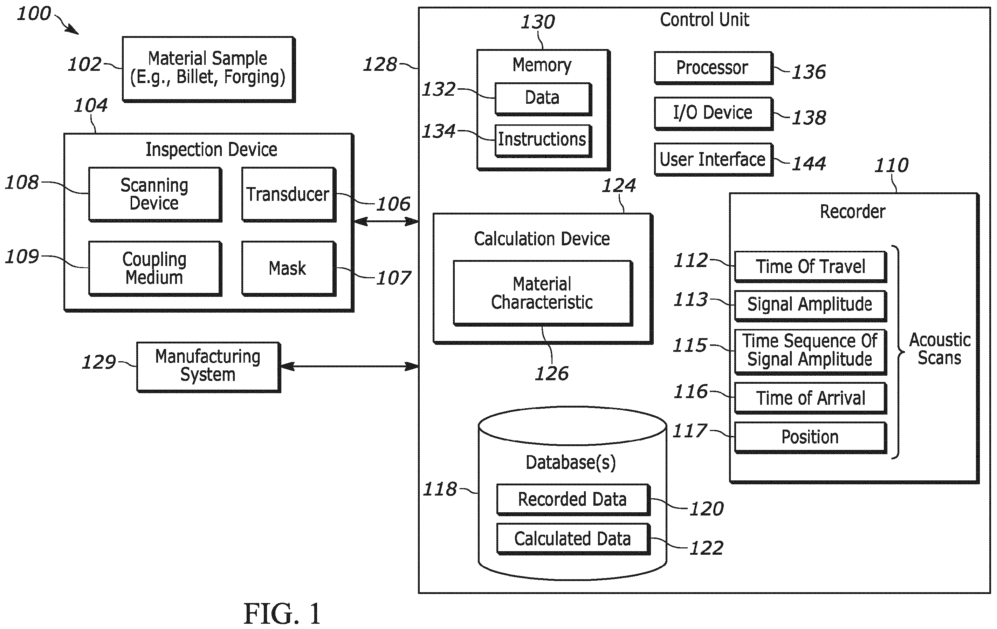

Turning now to the figures, FIG.1 illustrates an inspection system 100 that may be used for inspecting a material sample 102. The inspection system 100 may be used to determine one or more characteristics of the material sample 102. In some aspects, the material characteristics may relate to the microstructure of the material sample 102. The material sample 102 may include discontinuity characteristics such as cracks, voids, material anomalies (areas of different density or modulus), inclusions, etc., which may be detected by the inspection system 100. The material sample 102 may also have microstructure characteristics that are not cracks, voids, etc., but that may also be detected by the inspection system 100. The microstructure characteristics may be continuous characteristics. The microstructure characteristics (e.g., non-discontinuity type characteristics) may be detected by the system along with discontinuity characteristics. The material characteristics that may be deduced using the inspection system 100 may include but are not limited to grain (crystal) size, grain (crystal) orientation, grain shape, presence of an MTR, size of an MTR, intensity of an MTR, orientation of an MTR, macrotexture, dislocation content, residual elastic compressive or tensile stresses, or similar. In some examples, the material characteristic is an MTR characteristic in a titanium alloy, a grain size in an alloy, or a texture region in an alloy, e.g., a nickel alloy. The material characteristic may be any MTR characteristic such as size, shape, intensity, density, frequency, orientation, orientation spread, neighboring region characteristics, or volume fraction. In addition to titanium, the approaches described herein can also be applied to other alloys including but not limited to nickel.

An MTR may refer to aggregates of grains having a similar crystal orientation. Macrotexture may refer to MTRs or grains having a preferred crystal orientation with respect to the sample axes. Macrotexture may also drive differences in fatigue strength and tensile strength. It should be noted that as the material characteristics change, alloy performance may be impacted. For example, as MTRs increase in size and/or intensity in titanium alloys, cold dwell fatigue properties decrease. Similarly, as macrotexture intensifies (as measured by the intensity of crystal c-axis alignment in a sample) in titanium alloys, 0.2% yield strength and ultimate tensile strength increases. In nickel alloys, as grain size increases, fatigue properties decrease.

The inspection system 100 includes an inspection device 104, a recorder 110, one or more databases 118 (hereinafter referred to in the singular as the database 118), a calculation device 124, and a control unit 128. The inspection system 100 and various components thereof may be operated and controlled via a user interface 144.

The material sample 102 may be formed from a material having a crystalline structure such as cubic zirconia or a metallic alloy such as a titanium alloy, nickel alloy, aluminum alloy, steel, etc. Though, it is contemplated that the devices and methods described herein may be applied to any material where the properties of a surface acoustic wave traveling across the material vary as a function of the material characteristics and/or in a direction within the grain (crystal) of the material. The material sample 102 may be any suitable shape, size, or form. The material sample 102 may be a part or component or, in some aspects, may be a raw material such as a billet, plate, forging, or extrusion that is used as a feedstock in another processing operation such as extrusion, forging, rolling, machining, etc., to make the part or component. Any surface of a part or in-process raw material may be scanned using the inspection system 100. It is also contemplated that a slice or rectilinear sample of a billet, forging, or part may serve as the material sample 102. Thus, the inspection device 104 may be able to detect material characteristics of a raw material before the raw material is used to manufacture or otherwise form a component. In this manner, the material characteristics can be used to establish material quality and determine whether the raw material is suitable for use in a particular component. Testing before forming a component may ensure that proper materials are used to form a component before expending the manufacturing efforts, and also reduces the need for testing on the manufactured part or component.

Billet and component forge processing of metal alloys such as titanium alloys may impact the material characteristics of the metal alloys, such as the size and alignment of MTRs. For example, MTRs may be formed during billet conversion when the titanium alloy cools below the beta transus (e.g., the temperature where the high-temperature beta phase starts to transform to the low-temperature alpha phase for the last time) and may be subsequently shaped during the working of the billet and/or during component forging at temperatures below the beta transus. Several factors may impact the formation and shaping of MTRs such as billet work, component forging work, cooling rate from solution heat treatment, etc. Thus, it is contemplated that the material sample 102 may be taken at any point in the thermomechanical processing of the metal alloy to form the part after the material characteristic, such as an MTR, has formed. For example, the material sample 102 may be an end slice of a billet, a macroslice of a forged part (e.g., a fan disc), a surface of a forged part, or any other suitable sample taken of a billet, forging, or part before or after any step of the thermomechanical processing of a metal alloy. In some approaches, the material sample 102 may also be a part or component of a gas turbine engine (e.g., a part or component before assembly or a part or component that has been disassembled from a gas turbine engine).

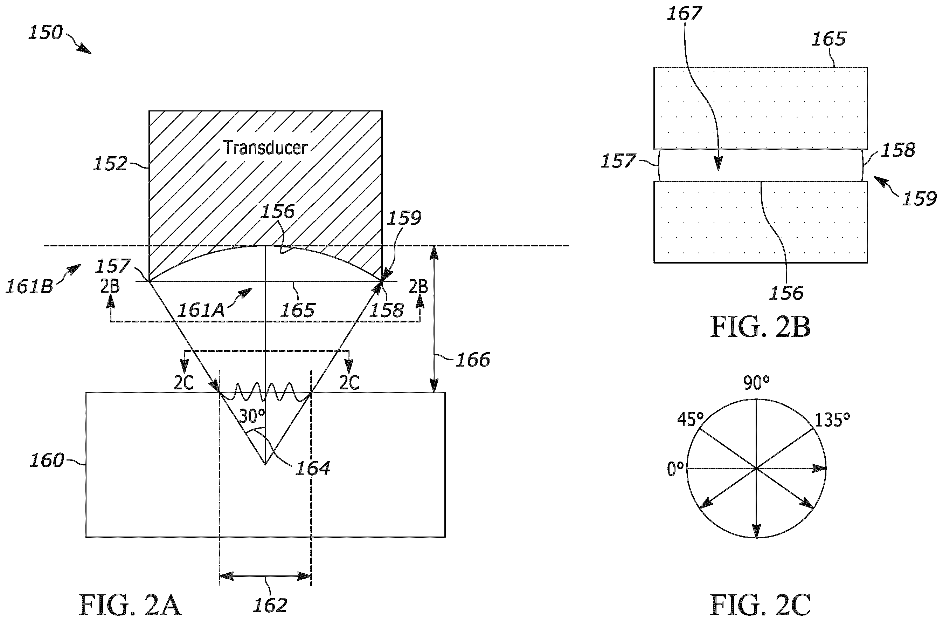

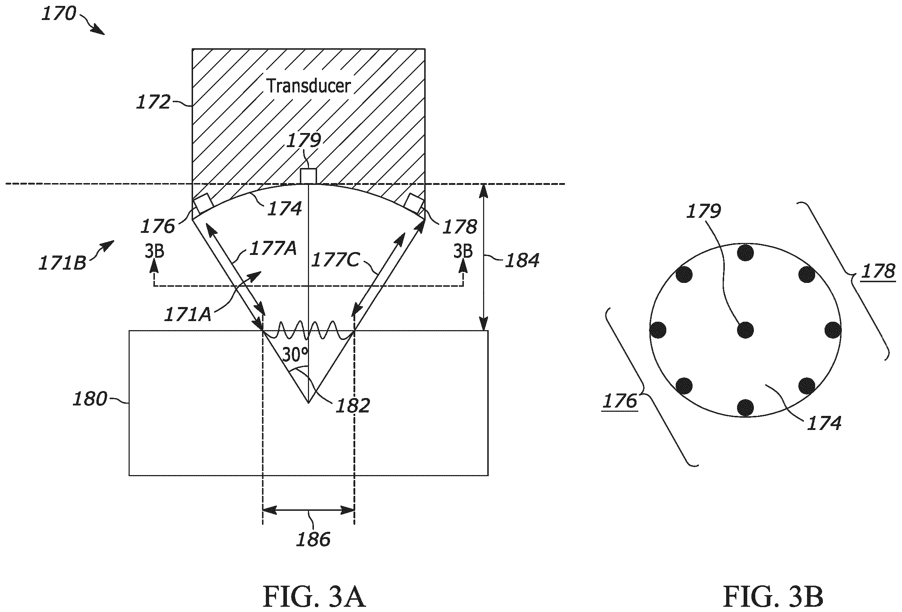

In the illustrated embodiment of FIG. 1, the inspection device 104 includes a transducer 106 with a mask 107 coupled thereto, a scanning device 108, and a coupling medium 109. The transducer 106 includes an acoustic transmitter portion and an acoustic receiver portion. The acoustic transmitter portion may be any suitable device for exciting a region of the material sample 102 with an acoustic wave. The acoustic transmitter portion may be any excitation source, energy source, or vibration source that generates or emits acoustic waves or pulses. The acoustic waves may be ultrasonic. The acoustic receiver portion may be any suitable device for receiving, measuring, quantifying, or otherwise detecting an acoustic wave and/or properties thereof. The acoustic receiver portion may convert incoming sound waves or pulses into electrical measuring signals (e.g., acoustic signals) that are indicative of the incoming sound waves. In some configurations, the acoustic receiver portion and the acoustic transmitter portion are contained within and/or implemented by a single piezoelectric device (see, e.g., FIGS. 2A and 2B). In such a single piezoelectric device, the transducer 106 may switch between a transmit mode and a receive mode. In other configurations, the acoustic receiver portion and the acoustic transmitter portion are separate piezoelectric devices (see, e.g., FIGS. 3A and 3B).

In some aspects, the acoustic transmitter portion and the acoustic receiver portion may operate using a single center frequency and its associated bandwidth. In other aspects, the acoustic transmitter portion and the acoustic receiver portion may operate by sweeping through a range of frequencies. The acoustic transmitter portion and the acoustic receiver portion of the transducer 106 may operate using frequencies up to about 2 Gigahertz and, in some aspects, between about 0.5 MHz and about 100 MHz, or between about 30 MHz to about 50 MHz. It may be desirable to select a frequency with a wavelength in the material that corresponds with a crystal size of the material comprising the material sample 102.

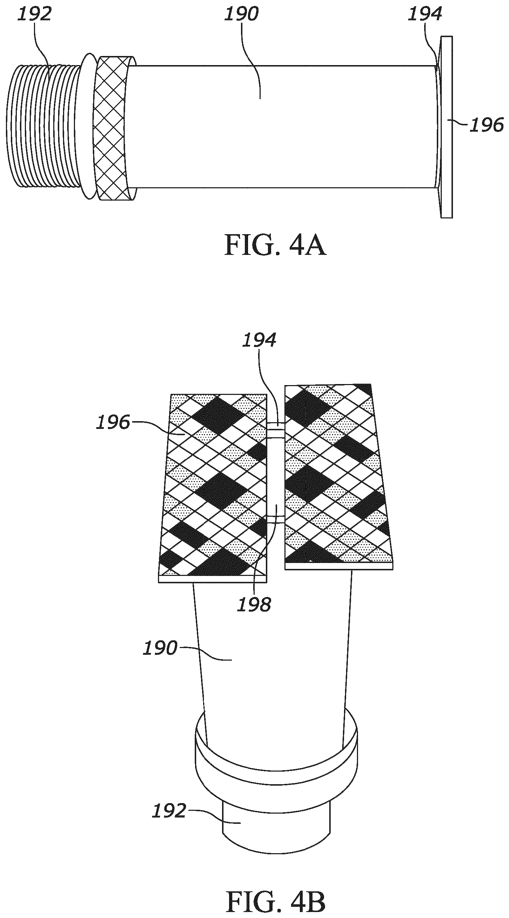

The mask 107 is directly coupled to the transducer 106. The mask 107 may be any structure that blocks acoustic waves. In some aspects, the mask 107 is shaped to control a sound path angle across the surface of the material sample 102. The mask 107 allows for selecting a direction or a sound path angle of acoustic energy of the acoustic transmitter portion of the transducer 106. The sound path angle, as used herein, refers to the angle across the surface of the material sample 102 with respect to a reference line across the surface of the material sample 102. For example, the reference line may correspond to one of the sample coordinate axes or the direction of the material flow. The sound path angle is illustrated in FIG. 2C. An exemplary mask is illustrated in FIGS. 4A and 4B. It is to be understood that the mask 107 is one example configuration for setting a sound path angle. Selecting among a plurality of acoustic transmitters and acoustic receivers is another exemplary approach for setting a sound path angle (FIGS. 3A and 3B). It is contemplated that in the transducer configuration of FIGS. 3A and 3B, a mask 107 may not be included because the sound path angle may be set by selecting pairs of acoustic transmitters and acoustic receivers. In some approaches, the mask 107 can be omitted by not including the portion of the piezoelectric active element that is covered by the mask 107.

The scanning device 108 is configured for adjusting the position of the transducer 106 relative to the material sample 102. The scanning device 108 may include a movable platform, a turntable, or another device that holds and/or is capable of moving the material sample 102. The scanning device 108 may also include a device such as a robotic arm that is operable to move the transducer 106. The scanning device 108 may be two separate controllable devices working in conjunction with each other. In some approaches, the scanning device 108 may also be configured to adjust the sound path angle.

The coupling medium 109 is disposed between the transducer 106 and the material sample 102. The material sample 102 or portions thereof may be immersed in the coupling medium 109 or may be wetted with the coupling medium 109. The coupling medium 109 may fill the travel gap between the acoustic transmitter portion and the acoustic receiver portion of the transducer 106 and a space between the transducer 106 and a surface of a material sample 102. In some approaches, a space surrounding the acoustic transmitter portion and the acoustic receiver portion of the transducer, and a surface of the material sample 102, may be filled with the coupling medium 109. The coupling medium 109 may be a liquid such as water or another fluid couplant such as oil, or solution. In some aspects, the coupling medium 109 may also be a paste, a gel, or, in certain aspects, a solid. The coupling medium 109 may aid in the transmission of acoustic energy from the transducer 106 to the material sample 102. The coupling medium 109 provides an efficient path for the propagation of acoustic waves from the transducer 106 to the material sample 102 to improve the transmission of the acoustic waves. For example, acoustic energy may not travel well through air or solids. There may be an impedance mismatch, for example between the transducer 106 and the material sample 102, and acoustic energy may be reflected back towards the transducer 106 rather than penetrating the material sample 102. The coupling medium 109 may act as a bridge across the transducer 106 and the material sample 102, which displaces air and allows acoustic energy to be transmitted to the material sample 102. The coupling medium 102 may help to increase or maximize the acoustic energy transmitted from the transducer 106 to the material sample 102.

The recorder 110 is in operative communication with the inspection device 104 and, in particular, is in communication with the transducer 106 though it may also be in communication with any component of the inspection device 104. The recorder 110 may record any data (e.g., surface acoustic wave data) collected, generated, or otherwise received by the inspection device 104. The recorder 110 may be an acoustic signal recorder for recording encoded acoustic signals and/or characteristics thereof upon a suitable storage medium. In some approaches, the recorder 110 may record the encoded acoustic signals and/or properties thereof in the database 118. The recorder 110 is configured to acquire a signal indicative of acoustic waves received by the acoustic receiver portion of the transducer 106.

In some approaches, the recorder 110 may record surface acoustic wave data including, which may include a property of the acoustic wave. The surface acoustic wave data may include a property of the acoustic wave such as the time of travel 112, signal amplitude 113, time sequence of signal amplitude 115, time of arrival 116, and/or position 117 of the acoustic signals received by the acoustic receiver portion. The time of travel 112 may include the difference between the time of transmission of acoustic waves from the transducer 106 and the time of receipt of the reflected acoustic waves by the transducer 106. The signal amplitude 113 may represent a strength of a signal representative of acoustic waves received by the transducer 106 and may indicate the strength of the acoustic wave, as represented by a height of the wave. The time sequence of signal amplitude 115 may include a series of times at which various signal amplitudes are detected or received by the transducer 106. The time of arrival 116 may indicate the time at which the reflected acoustic wave is received at the transducer 106. The position 117 may indicate a position of the transducer 106 relative to the material sample 102. The surface acoustic wave data may also include a geometric feature, such as size or aspect ratio, captured in a 2-dimensional or 3-dimensional representation of the surface acoustic wave response across the area of the material sample 102 as the property of the acoustic wave data. The time sequence of signal amplitude 115 provides a sequence of arrival events if an acoustic wave splits and there are multiple times of arrival (e.g., have multiple travel times). In some approaches, the recorder 110 may also be in communication with the scanning device 108 and may record data on the position of the material sample 102 relative to the inspection device 104 and/or on the sound path angle. In yet other approaches, the recorder 110 may also record time data associated with the time that one or more types of data are recorded. For example, the recorder 110 may record time data for when one or more signals are acquired or received by the inspection device 104 and/or for when one or more acoustic waves are transmitted (e.g., the difference between the transmission and the receipt being the time of travel). The recorder 110 may also record position data that indicates a position on the material sample 102 such as, for example, a location and/or sound path angle on the material sample 102 where the acoustic data is acquired. The recorder 110 may also record the entire waveform or portions thereof received by the inspection device 104 as an A-scan or a B-scan. The shape of the waveform may be indicative of MTR characteristics such as size, intensity, etc.

The database 118 may include one or more types of data (e.g., surface acoustic wave data) collected or used by the inspection system 100. For example, the database 118 may include one or more types of data collected, generated, and/or otherwise received by the inspection device 104. In another example, the database 118 may include data recorded (such as recorded data 120 in FIG. 1) by the recorder 110. In yet another example, the database 118 may include data calculated (such as calculated data 122 in FIG. 1) or otherwise determined by the calculation device 124. As noted above, the database 118 need not be a single database but may include one or more databases.

The calculation device 124 is configured to determine at least one characteristic of the material sample 102. The calculation device 124 may determine the at least one characteristic based, at least in part, on the data recorded 120 by the recorder 110 and/or based on data included in the database 118.

In some approaches, the calculation device 124 may be configured to use a direct value recorded by recorder 110. For example, the calculation device 124 may be configured to use one or more of the following types of data acquired from the inspection device 104 or combinations thereof: time of travel 112, signal amplitude 113, time sequence of signal amplitude 115, time of arrival 116, position 117, sound path angle (see FIG. 2B). In one approach, the calculation device 124 may determine whether a direct value recorded by the recorder 110 (or an absolute value thereof) satisfies (e.g., exceeds) a threshold value. In another approach, the calculation device 124 may compare data collected at a particular position at different sound path angles.

Additionally or alternatively, the calculation device 124 may be configured to perform statistical correlations or other data analysis of the data recorded 120 by the recorder 110. For example, the calculation device 124 may be configured to determine a standard deviation, a mean value, a median value, spread, variance, Fourier transform, etc. The calculation device 124 may determine analytical parameters of the time, statistics of the position, statistics of the time of travel, and/or statistics of the signal amplitude and may include binning data from multiple areas of interest together or application of various filtering techniques such as median filters or gaussian filters. In certain aspects, the calculation device 124 may be configured to determine one or more of the following:
Standard deviation of time of travel for one or more areas of interest on the material sample 102;
Average of time of travel for one or more areas of interest on the material sample 102;
Maximum of time of travel for one or more areas of interest on the material sample 102;
Standard deviation of signal amplitude for one or more areas of interest on the material sample 102;
Average of amplitude for one or more areas of interest on the material sample 102;
Maximum of amplitude for one or more areas of interest on the material sample 102;
Spatial variation of temporal variation of time of travel for the material sample 102;
Spatial variation of temporal variation of signal amplitude for the material sample 102;
Fourier sequence of time domain signal; and
Fourier sequence for spatial representation of the amplitude and/or time of travel signals.

In some approaches, the calculation device 124 may combine data to calculate a new measurement, for example, to determine a velocity of an acoustic wave that travels across the surface of the material sample 102. Another example may be to compare velocity calculations for different sound path angles at a specific position to estimate the lattice orientation of a grain (crystal). The calculation device 124 may further combine calculation results for multiple positions to form an image that indicates the relative lattice orientation of grains within a sample. This image may then be further processed to calculate the size, morphology, and/or intensity of microstructural features within the sample, such as MTRs. The calculation device 124 may determine the velocity based on the time of travel recorded by the recorder 110 and a travel gap (e.g., the distance the acoustic wave travels across the surface of the material sample 102).

In some approaches, the calculation device 124 may be calibrated using data from electron backscatter diffraction (EBSD). For example, data recorded 120 by the recorder 110, such as time of travel, may be correlated with a characteristic of a material, such as microstructural features, determined by electron backscatter diffraction (EBSD). In this manner, the calculation device 124 may automatically determine or identify a characteristic of the material based on the properties of the acoustic waves traveling across the surface of the material.

The control unit 128 is in operative communication with the inspection device 104 and, in particular, with the transducer 106. The control unit 128 may be configured to operate the transducer 106 and, in particular, may operate the acoustic transmitter portion and the acoustic receiver portion of the transducer 106 to control the transmission and receipt of acoustic waves. In some aspects, the control unit 128 is configured to control the timing, frequency, and/or the sound path angle. In some approaches, the control unit 128 is also configured to control the scanning device 108 to adjust the position of the transducer 106 relative to the material sample 102.

The control unit 128 typically comprises one or more processors 136 and/or microprocessors. The memory 130 stores the operational code or set of instructions 134 that is executed by the control unit 128 and/or the one or more processors 136 to implement the functionality of the inspection system 100 and the inspection device 104 or parts thereof. In some embodiments, the memory 130 may also store some or all of the data 132 that may be needed to inspect the material sample 102.

The control unit 128 may be implemented as one or more processors 136. Similarly, the memory 130 may be implemented as one or more memory devices such as one or more processor readable and/or computer-readable media, and can include volatile and/or nonvolatile media such as RAM, ROM, EEPROM, flash memory and/or other memory technology. Further, the memory 130 is shown as internal to the control unit 128; however, the memory 130 can be internal, external or a combination of internal and external memory. Additionally, the control unit 128 typically includes a power supply (not shown), which may be rechargeable, and/or may receive power from an external source.

The user interface 144 may be used to control one or more components of the inspection system 100. The user interface 144 may be used for user input and/or output display. For example, the user interface 144 may include any known input/output (I/O) devices 138, such as one or more buttons, knobs, selectors, switches, keys, touch input surfaces, audio input, and/or displays, etc. Additionally, the user interface 144 may include one or more output display devices, such as lights, visual indicators, display screens, etc., to convey information to a user, such as but not limited to communication information, status information, order information, delivery information, notifications, errors, conditions, and/or other such information. Similarly, the user interface 144 in some embodiments may include audio systems that can receive audio commands or requests verbally issued by a user, and/or output audio content, alerts, and the like.

In some approaches, the inspection system 100 may further be in communication with a manufacturing system 129. The manufacturing system 129 may be any manufacturing system and, in some non-limiting examples, may be any system that performs thermomechanical processing of a component, manufacturing of a part, or manufacturing of a raw material used to form a component or a part. In some aspects, the manufacturing system 129 is used to form the material sample 102 or to form components, parts, or raw materials having a material composition similar to that of the material sample 102 (e.g., similar alloy composition, crystal structure, etc.). The manufacturing system 129 may perform one or more manufacturing processes, for example, to form a component or a part, or to otherwise perform the thermomechanical processing of a material. The inspection system 100 may provide manufacturing process feedback into the manufacturing system 129. For example, the material characteristic 126 determined by the calculation device 124 may be used to adjust a parameter of a manufacturing process performed by the manufacturing system 129. For example, if the calculation device 124 determines that the material sample 102 has a high MTR intensity or has a microstructure that is not acceptable, the inspection system 100 may cause an adjustment to a parameter (e.g., an amount of material to be cropped at the end of the billet) of a manufacturing process executed by the manufacturing system 129.

In some approaches, the material characteristic detected by the inspection system 100 may include an MTR characteristic of the material sample 102. The MTR characteristic may be a characteristic of an MTR in the material sample 102 and/or characteristics of the material sample 102 that indicative of the presence of an MTR. For example, the material characteristic may include one or more of a grain size, a grain structure, a grain orientation, a grain shape, a presence of a microtexture region, a size of a microtexture region, an intensity of a microtexture region, an orientation of a microtexture region, a macrotexture, dislocation content, and residual elastic compressive or tensile stresses of the material sample.

In operation, the inspection device 104 performs at least one scan of the material sample 102. In the scan, the inspection device 104, in particular the acoustic transmitter portion of the transducer 106, transmits or generates an acoustic wave. The acoustic wave travels through the coupling medium 109 to the surface of the material sample 102 to generate surface acoustic waves that travel along the surface of the material sample 102 and are received by the receiver portion of the transducer 106. The acoustic receiver portion detects the acoustic wave after the acoustic wave has interacted with the surface of the material sample 102.

The control unit 128 may access data obtained by the acoustic receiver portion of the transducer 106, such as the data indicative of the surface acoustic waves. Further, the control circuit may determine at least one material characteristic of the material sample based on the data indicative of the surface acoustic waves.

The acoustic propagation properties of the material sample 102 may impact the manner in which the acoustic wave travels through or across the material sample 102. The type of material, the method of formation, the microstructural features (e.g., MTRs), and other factors may impact the manner in which the acoustic wave travels. The velocity of the acoustic waves may vary as a function of material characteristics of the material sample 102, such as the size and intensity of MTRs present in the material sample 102. For example, the speed of sound is proportional to the modulus of a material sample. In a crystalline material, such as a titanium alloy, the modulus is impacted by the orientation in the material with respect to the c-axis, or basal pole, typically referred to in Miller-Bravais indices as [0001]. Thus, the angle of orientation with respect to the c-axis of crystals in a titanium alloy, e.g., the material sample 102, may also impact the velocity of acoustic waves traveling through the material sample 102. This velocity variation can be measured and used to calculate the absolute orientation of the [0001] axis of a grain or the average [0001] orientation of a group of grains relative to the sample surface. In another example, an amplitude of the acoustic waves may vary based on the presence of dislocations or the intensity of an MTR region in the material sample 102. In this manner, the acoustic wave may reveal or otherwise be indicative of information on the characteristics of the material sample 102.

In some approaches, the inspection device 104 may perform scans at a plurality of different positions on the surface of the material sample 102. In some aspects, the inspection device 104 may scan the entire surface or a majority of the surface of the material sample 102. At each position or point on the surface of the material sample, the inspection device 104 may perform scans at a plurality of different sound path angles and, in some aspects, more than two different sound path angles. That is, the acoustic transmitter portion of the transducer 106 may perform a plurality of scans at a single point where the acoustic transmitter portion transmits acoustic waves in a plurality of directions across the surface of the material sample at a single point. In some approaches, the inspection device 104 performs scans in at least four sound path angles at each position.

A particular sound propagation direction and/or sound path angle may provide an improved resolution or contrast in time of travel values for a sample. For example, a particular sound propagation direction and/or sound path angle of the acoustic waves may be selected to optimize or otherwise improve the response of a grain structure characteristic of the material sample 102. In some approaches, the sound path angle may be adjusted (e.g., via the position of the slit 198 in FIG. 4B) to align with metal flow of a billet when the material sample 102 is a billet, or metal flow of a forging when the material sample 102 is a forging. In other approaches, the sound path angle may be adjusted based on one or more properties of the material sample 102.

The inspection system 100 may detect changes in the crystallographic orientation of a sample via changes in the surface wave velocity parallel to the propagation direction of the acoustic waves produced by the transducer 106. For a given propagation direction, the velocity alone may not be adequate to provide a unique solution for the orientation of material (e.g., grains) in the region of interest. While the maximum velocity in the image may correspond to grains with their [0001] parallel to the beam propagation direction, the minimum velocity may correspond to the [0001] anywhere from the surface normal to 90° to the beam propagation direction in the surface. Similarly, intermediate beam velocities may correspond to either an MTR that is oriented with its [0001] at an intermediate angle to the surface, or it could be a mixture of grains at different orientations with an average velocity intermediate to the extremes. The inspection system 100 may perform additional data processing to extract spatially correlated crystallographic data, akin to an EBSD inverse pole figure map.

For a given location in the material sample 102, a series of acoustic scans may be collected with multiple acoustic wave propagation directions (e.g., sound path angles). The measured velocity for a given point is expected to vary as a function of the inclination of the [0001] to the surface - areas with a [0001] normal to the surface will not vary with different propagation angles, however areas with [0001] inclined to the surface will show variable wave propagation velocities. This variation in propagation velocity can be used to determine the inclination of the [0001] to the surface.

Turning to FIG. 2A, an inspection device 150 including a mask 165 is illustrated. FIG. 2A provides a cross-sectional side view of the inspection device 150. The inspection device 150 may correspond to the inspection device 104 and the material sample 160 may correspond to the material sample 102 of FIG. 1. The inspection device 150 includes a transducer 152. The transducer 152 is cylindrical in shape, though, in other embodiments the transducer 152 may be other suitable shapes. The transducer 152 has a concave face 156. The transducer 152 is mounted adjacent to a surface of a material sample 160. The concave face 156 of the transducer 152 is disposed at an end of the transducer 152.

As shown in FIG. 2A, the concave face 156 is spaced from the surface of the material sample 160 by a distance 166. The concave face 156 of the transducer 152 may be a hemispherical or non-hemispherical surface bounded by a peripheral edge 159. In one example, a non-hemispherical face may be a concave rectangular strip with a curved surface. Such a strip may or may not possess curved corners. The peripheral edge 159 of the concave face 156 of the transducer 152 includes an acoustic transmitter portion 157 and an acoustic receiver portion 158. The acoustic transmitter portion 157 and the acoustic receiver portion 158 create a travel gap therebetween. The acoustic transmitter portion 157 is opposite the acoustic receiver portion 158. In this embodiment, the acoustic transmitter portion 157 and the acoustic receiver portion 158 are part of a single piezoelectric device.

The concave face 156 is the active element of the transducer 152 and is a single piezoelectric element that operates as both an acoustic transmitter and an acoustic receiver. The concave face 156 may switch between a transmit mode and a receive mode in operation. The piezoelectric element may operate in a transmit mode in which the transducer 152 operates to activate the piezoelectric element (e.g., the concave face 156) to produce acoustic waves. The piezoelectric element also operates in a receive (or listening) mode in which the transducer 152 waits for acoustic waves to reflect off the surface of the material sample 160 and bounce back to the piezoelectric element (e.g., the concave face 156). Applying electrical energy to the concave face 156 causes the concave face 156 to expand and contract, causing the concave face 156 to vibrate. The vibration of the concave face 156 results in acoustic waves that travel from the acoustic transmitter portion 157 of the transducer 152 to the material sample 160. The thickness of the active element may determine the frequency of the acoustic waves. The acoustic waves travel across the surface of the material sample 160. The acoustic waves are reflected back to the concave face 156 to the acoustic receiver portion 158 of the transducer 152.

Because the concave face 156 is a piezoelectric material, when the acoustic wave reaches the concave face 156 the motion converts back into an electrical signal. When the acoustic wave is an ultrasonic wave, the electrical signal may be referred to as an ultrasonic waveform. The transducer 152 may emit acoustic waves at a particular pulse repetition rate. The pulses (e.g., the transmission of acoustic waves) may be spaced to allow time between pulses so that the acoustic waves have enough time to reach the material sample 160 and return to the transducer 152 before the next pulse is generated. It is also contemplated that the acoustic transmitter portion 157 may act as an acoustic receiver and that the acoustic receiver portion 158 may act as an acoustic transmitter so that the acoustic waves may also travel across the material sample 160 in the opposite direction or in two directions between the acoustic transmitter portion 157 and the acoustic receiver portion 158.

The acoustic transmitter portion 157 generates or transmits acoustic waves. As shown, the acoustic waves generated by the acoustic transmitter portion 157 of the transducer 152 encounter the surface of the material sample 160 at an incidence angle 164. The incidence angle 164 is such that the acoustic waves travel across the surface of the material sample 160 across a travel gap 162. In some approaches, the incidence angle is between about 20 degrees and about 40 degrees. In other approaches, the incidence angle is between about 25 degrees and about 35 degrees. In yet other approaches, the incidence angle is between about 28 and about 32 degrees, and, in some aspects, the incidence angle is about 30 degrees. The radius of curvature of the concave face 156 may be selected to focus the acoustic energy and achieve a particular incidence angle that results in surface acoustic waves (Raleigh waves) that travel across the surface of the material sample 160. It is contemplated that the radius of curvature may correspond to the incidence angle and, accordingly, the aforementioned ranges for the incidence angle also apply to the radius of curvature. For example, the radius of curvature may also be between about 20 degrees and about 40 degrees.

The travel gap 162 is the distance that the acoustic waves travel across the surface of the material sample 160. The acoustic waves travel across the travel gap 162 and are received by the acoustic receiver portion 158 of the transducer 152. The time of travel for the acoustic waves across the travel gap 162 is impacted by the characteristics, such as the microstructure, of the material sample 160. For example, the size and orientation of the crystalline grain structure may impact the time of travel for the acoustic waves across the travel gap 162.

The inspection device 150 further includes a coupling medium (not shown in FIG. 2A). In some approaches, the space surrounding the travel gap 162, the material sample 160, and the concave face 156 is filled with the coupling medium. In some approaches, the entire inspection device 150 is submerged in the coupling medium (such as the coupling medium 108 (FIG. 1)). In some approaches, a first volume 161A, which submerges an entirety of the concave face 156, is filled with the coupling medium. In other approaches, a second volume 161B, which encompasses the space between the acoustic transmitter portion 157 and the acoustic receiver portion 158 through which acoustic waves may travel between the transducer 152 and the surface of the material sample 160, is filled with the coupling medium.

FIG. 2B is an end view of the transducer 152 of FIG. 2A. The bottom end of the transducer 152 includes the concave face 156. The peripheral edge 159 of the concave face 156 is an annular edge that has a mask 165 coupled thereto. A portion of the peripheral edge 159 of the concave face 156 is blocked by the mask 165. The mask 165 includes a slit 167 that creates a path from the acoustic transmitter portion 157 to the acoustic receiver portion 158. The slit 167 may help to guide or direct the acoustic waves from the acoustic transmitter portion 157 to the acoustic receiver portion 158. In some approaches, the mask 165 may be omitted by not including the portion of the piezoelectric active element that is covered by the mask 165.

FIG. 2C is a top view of a portion of the upper surface of the material sample 160 of FIG. 2A. In particular, FIG. 2C illustrates various sound path angles for acoustic waves transmitted and received by the inspection device 150. As shown, the inspection device 150 may perform scans at a plurality of different sound path angles. In the illustrative example shown in FIG. 2C, the inspection device 150 performs four scans including a scan at a sound path angle of 0 degrees, a scan at a sound path angle of 45 degrees, a scan at a sound path angle of 90 degrees, and a scan at a sound path angle of 135 degrees. The direction between the acoustic transmitter portion 157 and the acoustic receiver portion 158 is used to determine or set the sound path angle. It is to be understood that the specific sound path angles that are illustrated in FIG. 2C are not limiting and that the inspection device 150 may perform scans at any combination of angles and at any number of different angles. It is contemplated that comparing the velocity of surface acoustic waves at different sound path angles makes it possible to estimate the lattice orientation of a grain (crystal).

FIG. 3A illustrates an inspection device 170 having an alternative configuration. FIG. 3A provides a cross-sectional side view of the inspection device. The inspection device 170 may correspond to the inspection device 104 and the material sample 180 may correspond to the material sample 102 of FIG. 1. The inspection device 170 includes a transducer 172 having a concave face 174. In this example, the transducer 172 is cylindrical in shape. The transducer 172 is mounted adjacent to a surface of a material sample 180.

The transducer 172 includes a concave face 174 that includes an acoustic transmitter portion 176 spaced from an acoustic receiver portion 178. In this example, the acoustic transmitter portion 176 and the acoustic receiver portion 178 are separate piezoelectric elements (whereas FIGS. 2A and 2B include an acoustic transmitter portion and an acoustic receiver portion in a single piezoelectric element). The acoustic transmitter portion 176 is positioned opposite the acoustic receiver portion 178. The acoustic transmitter portion 176 may include one or more acoustic transmitters. Similarly, the acoustic receiver portion 178 may include one or more acoustic receivers.

The acoustic transmitter portion 176 generates or transmits acoustic waves. As shown, the acoustic waves generated by the acoustic transmitter portion 176 encounter the surface of the material sample 180 at an incidence angle 182. The incidence angle 182 is such that the acoustic waves travel across the surface of the material sample 180 across a travel gap 186. In some approaches, the incidence angle is between about 20 degrees and about 40 degrees, between about 25 degrees and about 35 degrees, between about 28 and about 32 degrees, and in some aspects, the incidence angle is about 30 degrees. The radius of curvature of the concave face 174 may be selected to achieve a particular incidence angle that results in surface acoustic waves (Raleigh waves) that travel across the surface of the material sample 180. The acoustic waves are then received by the acoustic receiver portion 178 of the transducer 172.

The inspection device 170 further includes a sensor 179 for indicating the position of the transducer 172 relative to the material sample 180. The sensor 179 may sense, detect, or otherwise determine the distance 184 between the concave face 174 and the surface of the material sample 180. The sensor 179 may be a piezoelectric device that acts as an acoustic transmitter and an acoustic receiver. Accordingly, the sensor 179 may transmit acoustic waves to the sample and receive reflected waves from the sample. The time of travel of the acoustic waves to the material sample 180 and back to the sensor 179 and the velocity of sound through a coupling medium such as water may then be used to determine the distance 184. In some embodiments, the sensor 179 may also be used to ensure that the material sample 180 is level with respect to the transducer 172. For example, the sensor 179 may be used to measure the distance 184 between the transducer 172 and the material sample 180. The level of the material sample 180 may be adjusted until the distance 184 is substantially the same at different points across the entire surface of the material sample 180 or otherwise is substantially the same at a plurality of points along the material sample 180. To achieve this, the level of the material sample 180 may be adjusted until the time of travel is substantially the same at different points along the surface of the sample. It is contemplated that the surface of the material sample 180 may be substantially flat.

The distance 184 may be used to determine a travel distance that the acoustic waves travel between the acoustic transmitter portion 176 and the acoustic receiver portion 178. The travel distance is illustrated by the sum of a first distance 177A, the travel gap 186, and a second distance 177C. The first distance 177A extends between the acoustic transmitter portion 176 and the surface of the material sample 180. The second distance 177C extends between the surface of the material sample 180 and the acoustic receiver portion 178. In some approaches, the travel distance may be determined via one or more geometric formulas when the distance 184 is known. The travel gap 186 may also be determined by one or more geometric formulas when the distance 184 is known. The travel gap 186 is used, along with the time of travel, to determine the velocity of surface acoustic waves that travel across the surface of the material sample 180.

The inspection device 170 further includes a coupling medium (not shown in FIG. 3A). In some approaches, the space surrounding the travel gap 186, the material sample 180, and the concave face 174 is filled with the coupling medium. In some approaches, the entire inspection device 170 is submerged in the coupling medium. In some approaches, a first volume 171A, which submerges an entirety of the concave face 174, is filled with the coupling medium. In other approaches, a second volume 171B, which encompasses the space between the acoustic transmitter portion 176 and the acoustic receiver portion 178 through which acoustic waves may travel between the transducer 172 and the surface of the material sample 180, is filled with the coupling medium.

FIG. 3B is a bottom view of the transducer 172 of FIG. 3A. The bottom end of the transducer 172 includes the concave face 174. The concave face 174 does not include a mask. FIG. 3B illustrates the acoustic transmitter portion 176, which in this embodiment includes an array of acoustic transmitters, and the acoustic receiver portion 178, which includes an array of acoustic receivers. The acoustic transmitter portion 176 and the acoustic receiver portion 178 are positioned on opposing sides of the concave face 174. It is also contemplated that the acoustic transmitter portion 176 may act as an acoustic receiver and that the acoustic receiver portion 178 may act as an acoustic transmitter so that the acoustic waves may travel across the material sample 180 in the opposite direction simultaneously.

FIGS. 4A and 4B show a transducer 190 that may be used in the inspection devices described herein. The transducer 190 includes a mounting portion 192 and a concave face 194. The concave face 194 includes an acoustic transmitter portion and an acoustic receiver portion. The mounting portion 192 may be any suitable structure, mechanism, or device for mounting or coupling the transducer 190 to another structure. The mounting portion 192 may act as a transducer holder. In some examples, the mounting portion 192 is coupled to a portion of an immersion tank that is used for acoustic inspection. For example, the mounting portion 192 may be coupled to a robotic arm or other structure that is mounted to the immersion tank for moving the transducer 190 relative to a material sample to be inspected. Other structures that can be used to move the transducer 190 include, for example, a mast that moves via a system of drives. Such a mast may be a straight X-Y scanner or may have a gimbal and/or swivel angle controls. The immersion tank may contain a coupling medium (coupling medium 109 (FIG. 1)). An electrical connection to the transducer 190 may be provided through the inside of the mounting portion 192, however, the electrical connection may also be supplied from an external wire.

As shown, the mounting portion 192 includes external threads that are received by a complementary threaded portion of another structure. For example, the mounting portion 192 may be coupled to a robotic arm that is mounted to an immersion tank. The transducer 190 can be rotated, for example to adjust the position of the mask 196 and accordingly the sound path angle, by screwing or unscrewing threads on the mounting portion 192 of transducer relative to the threaded portion of another structure. It is also contemplated that the sound path angle can also be adjusted by replacing the mask 196 with a different mask, using a friction-fit rubber cap to mount the mask 196 to the transducer 190, or by using a mechanical capability of the immersion tank such as a turntable on which the material sample rests or a rotation of the mounting portion

The transducer 190 may include a mask 196. The mask 196 is coupled at the distal end of the transducer 190. In the embodiment shown in FIG. 4B, the mask 196 is coupled to the peripheral edge of the concave face 194. The mask 196 includes a slit 198 formed therein. The slit 198 is an opening in the mask 196 that provides a path through which acoustic waves may travel. The mask 196 is shaped to direct sound through the slit 198. The mask 196 may be made of any suitable material and may be of any suitable size or shape to direct sound from the acoustic transmitter portion of the transducer 190 (or a portion thereof) to the acoustic receiver portion of the transducer 190 (or a portion thereof). The transducer 190 may be rotated via the mounting portion 192 to adjust the position of the mask 196. Rotating the transducer 190 repositions the slit 198 to adjust the sound path angle.

The acoustic inspection devices described herein may use other suitable mask configurations. Also, although the transducer 190 uses the mask 196 to adjust the sound path angle, it is contemplated that other suitable manipulation features, devices, or approaches for directing or limiting the travel of acoustic waves may be employed. In some approaches, the mask 196 may be omitted by not including the portion of the piezoelectric active element that is covered by the mask.

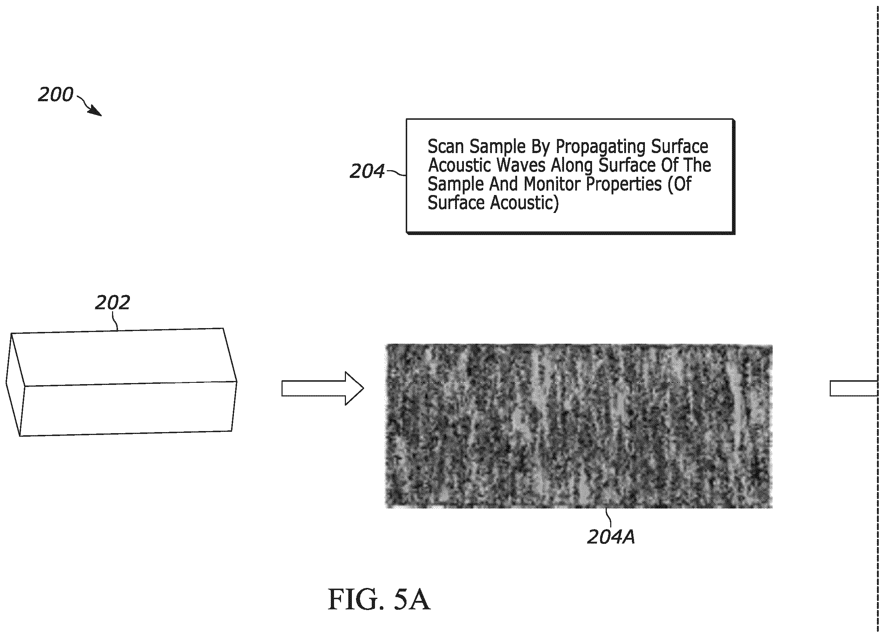

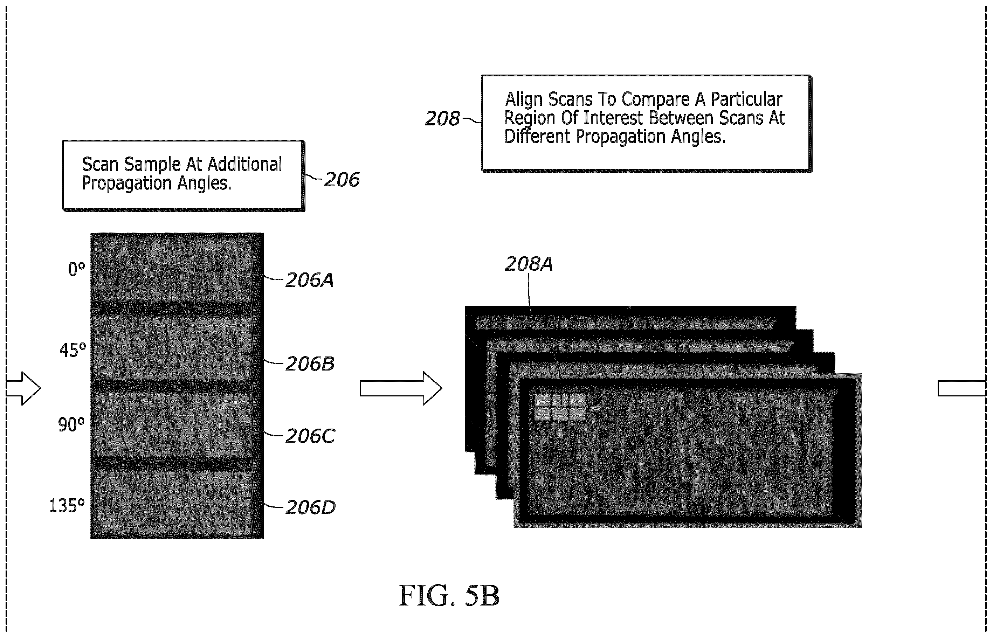

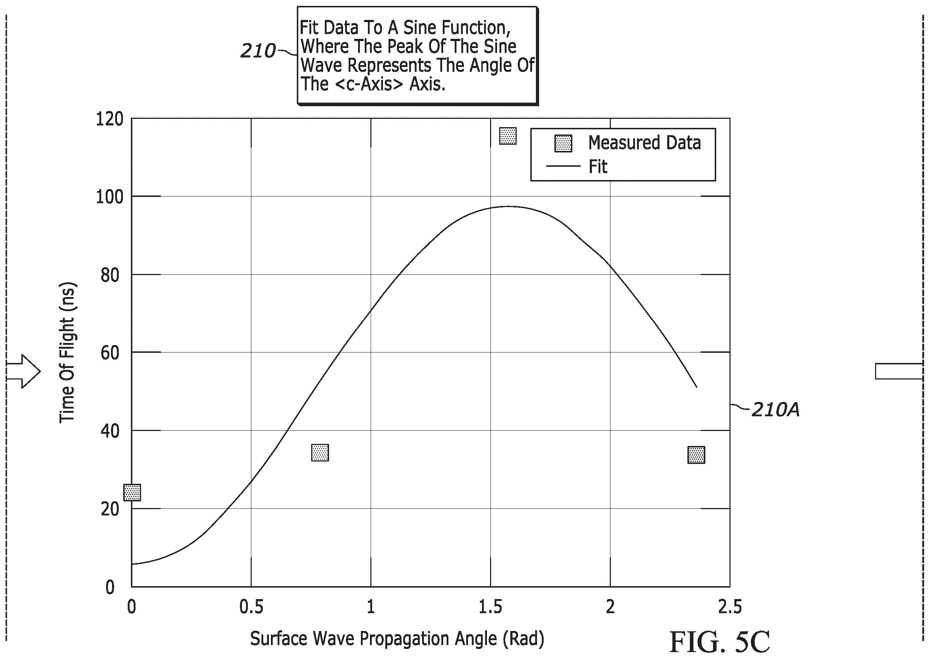

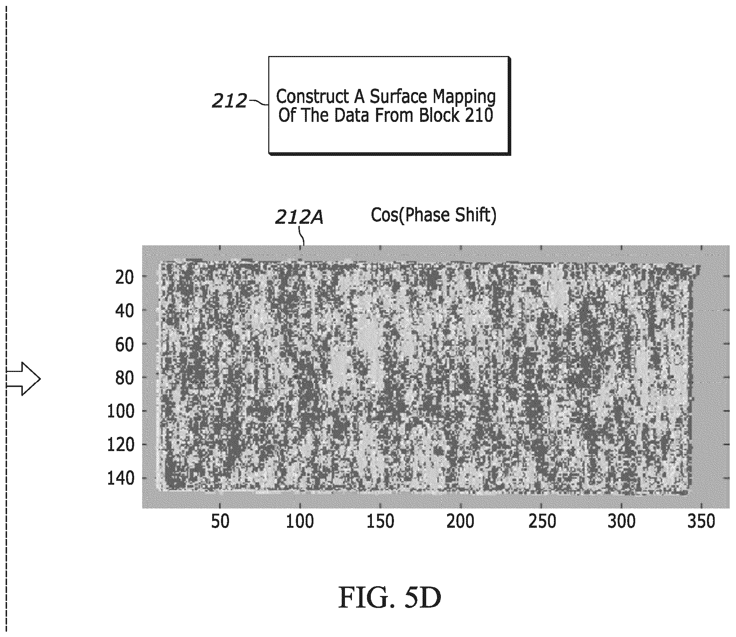

Now turning to FIGS. 5A-5D, a method 200 for inspecting a material sample 202 is illustrated. In some approaches, the material sample 202 is the material sample 102 described with reference to FIG. 1. The material sample 202 may be any suitable form or shape, such as a rectangular bar or a round slice cut up from a billet. The material sample 202 shown in FIGS. 5A-5D is a rectangular bar, however, in other examples the material sample 202 can be shaped differently. The method 200 may use the inspection system 100 of FIG. 1. Thus, the control unit 128, the recorder 110, the inspection device 104, and the calculation device 124 may be configured to carry out one or more steps of the method 200.

At block 204, the method 200 includes scanning the material sample 202 at a first sound path angle. The scan includes transmitting acoustic waves along the surface of the material sample 202 and monitoring the properties of the surface acoustic waves. As noted above, in some embodiments, the inspection device 104 may scan the material sample 202. In a scan operation, the transmitter portion of the transducer 106 may transmit the acoustic waves and the receiver portion of the transducer 106 may receive the acoustic waves. The recorder 110 records the properties of the surface acoustic waves. The inspection device 104 may perform a plurality of scans at the first sound path angle, wherein the plurality of scans occurs at a number of different positions or points across the surface of the material sample 202. In some approaches, the scanning device 108 may adjust the position of the material sample 202 and/or the transducer 106 to perform scans at various positions across the surface of the material sample 202.

Image 204A is an exemplary 2D image of data recorded by the recorder 110 after the inspection device 104 has scanned the material sample 202. In particular, the image 204A illustrates the time of travel from scans performed at various positions across the surface of the material sample 202. The rectangular shape of the image 204A corresponds with one of the rectangular surfaces of the material sample 202.

At block 206, the method 200 includes performing, via the inspection device 104, additional scans at additional sound path angles. In some approaches, the transducer 106 is rotated to perform the scans at the additional sound path angles.

A first image 206A, a second image 206B, a third image 206C, and a fourth image 206D are exemplary 2D images of data recorded by the recorder 110 from the additional scans of the material sample. The first image 206A includes data from a scan performed at a first sound path angle (e.g., a sound path angle of 0°). The second image 206B includes data from a scan performed at a second sound path angle (e.g., a sound path angle of 45°). The third image 206C includes data from a scan performed at a third sound path angle (e.g., a sound path angle of 90°). The fourth image 206D includes data from a scan performed at a fourth sound path angle (e.g., a sound path angle of 135°).

One or more of the steps from block 208 to block 212 may be executed by a control unit such as the control unit 128 described with reference to FIG. 1.

At block 208, the method 200 includes aligning data from the different scans to compare data obtained at the different sound path angles at a particular position of interest. For example at position 208A on the material sample 202, the data from the scan at the first sound path angle (e.g., from the first image 206A) is aligned with the data from the scan at the second sound path angle (e.g., from the second image 206B), the data from the scan at the third sound path angle (e.g., from the third image 206C), and the data from the scan at the fourth sound path angle (e.g., from the fourth image 206D).

At block 210, the method 200 includes fitting the aligned data to a sine function, where the phase shift of the sine wave is proportional to the angle of the c-axis of the crystal. For example, graph 210A provides the time of travel for the scans taken at position 208A at each sound path angle. In particular, graph 210A plots the time of travel as a function of the sound wave angle. Graph 210A also illustrates the time of travel data fit to a sine function of the form A₀+A*sin(2*(θ-ϕ)) where: A₀ = the mean time of travel (ToT), A = the ToT Amplitude, θ = the acoustic propagation direction angle and ϕ = the phase shift. This fitting procedure can be done using an ordinary least-squares approach, or any other approach that can determine the optimal fit of the sine function to the data.

At block 212, the method 200 includes mapping the data from block 210 to the surface of the material sample 202 to create or generate a mapping 212A. For example, when the sine function has a small phase shift value, the position is marked a first color, shade, or other indicator in the mapping. When the sine function for the data at a second position has a larger phase shift value, the second position is marked with a second color, shade, or other indicator in the mapping. It is contemplated that the mapping may include more than two colors, shades, or indicators.

The mapping 212A is an illustration of a mapping created by mapping the data from block 210 to positions on the surface of the material sample 202. Large areas of light shading or dark shading may be indicative of MTRs in the material sample 202. The large areas where color or intensity is consistent may indicate regions where crystals of the material structure are aligned in the same direction.

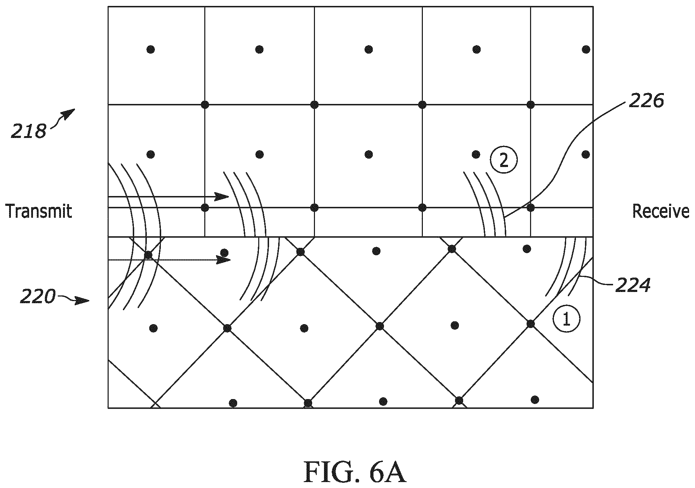

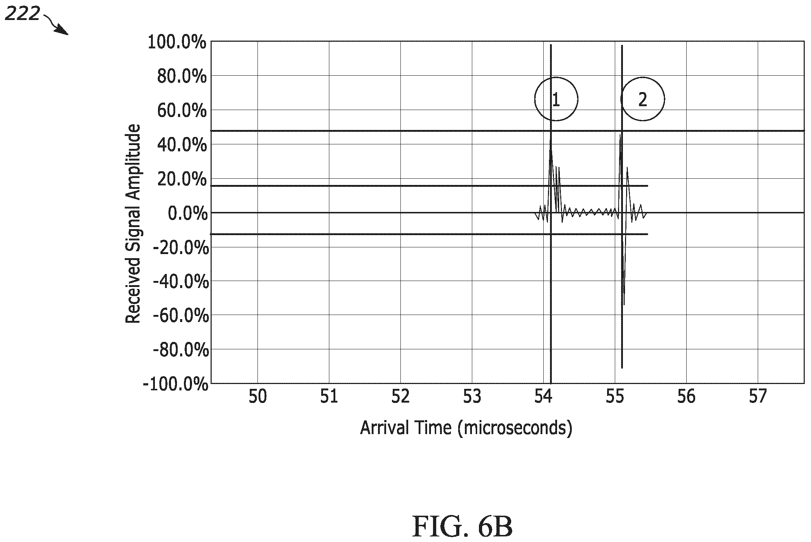

FIGS. 6A and 6B illustrate acoustic waves passing through two different crystal structures 218, 220 from a transmitter to a receiver, illustrating how crystal orientation impacts the time of travel for an acoustic wave traveling through a material. As shown in FIG. 6A, the acoustic waves 224 move across the surface of the second crystal structure 220 faster than the acoustic waves 226 move across the surface of the first crystal structure 218. The difference in the velocities of the acoustic waves 224 and the acoustic waves 226 is due, at least in part, to the different grain (crystal) orientations in the first crystal structure 218 and the second crystal structure 220. As a result, the acoustic waves 224 will travel further than the acoustic waves 226 over a fixed amount of time. The encircled number one (1) illustrates a distance traveled by the acoustic waves 224 across the second crystal structure 220 over a fixed amount of time. The encircled number two (2) illustrates a distance traveled by the acoustic waves 226 across the first crystal structure 218 in the same fixed amount of time.

Graph 222 in FIG. 6B provides a graph of the arrival time of the acoustic waves received by the receivers. The arrival time of the acoustic waves passing through the second crystal structure 220 (having faster acoustic velocity) is before the arrival time of the acoustic waves passing through the first crystal structure 218. The encircled number one (1) on the graph 222 shows the arrival time of the acoustic waves 224 that traveled across the second crystal structure 220. The encircled number two (2) on the graph 222 shows the arrival time of the acoustic waves 226 that traveled across the first crystal structure 218. Because the acoustic waves 224 travel at a greater velocity than the acoustic waves 226, they arrive at the receiver sooner than the acoustic waves 226.

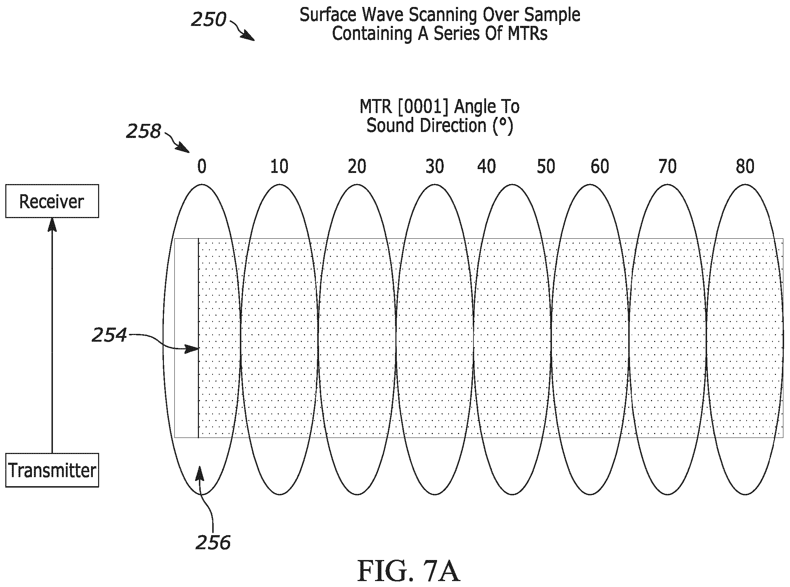

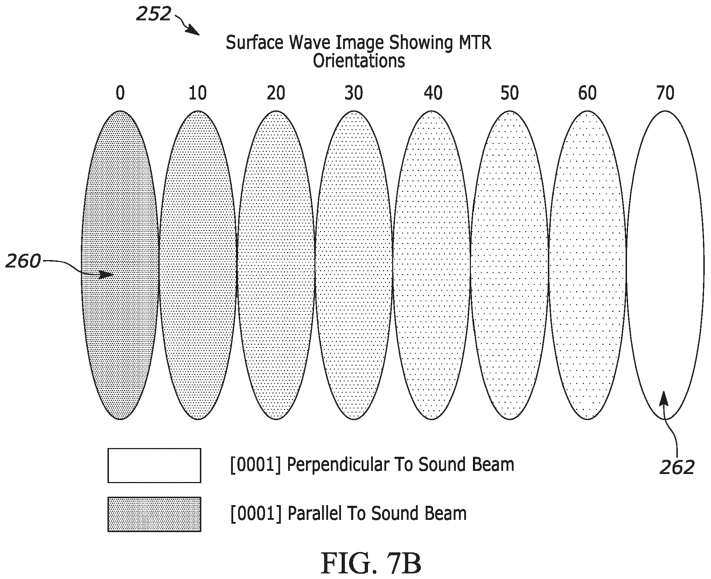

FIG. 7A and 7B are schematic diagrams illustrating surface acoustic waves scanning over a sample containing a series of MTRs. The diagram 250 in FIG. 7A illustrates acoustic waves 254 passing from an acoustic transmitter to an acoustic receiver through a series of MTRs 256. The axis of each of the MTRs 256 is oriented at a different angle (see angles indicated by reference number 258) with respect to the direction of the acoustic waves. The surface wave diagram 252 of FIG. 7B illustrates the relative speed at which the acoustic waves travel through the MTRs 256. The MTRs in the surface wave diagram 252 are shaded from dark to light. The darkest shading 260 indicates the shortest time of travel for the acoustic waves to pass from the acoustic transmitter to the acoustic receiver and, accordingly, the acoustic waves having the fastest velocity. The shortest time of travel may be due to the MTR primary axis being parallel to the direction of the acoustic waves. The lightest shading 262 indicates the longest time of travel for the acoustic waves to pass from the acoustic transmitter to the acoustic receiver and, accordingly, the acoustic waves having the slowest velocity. The longest time of travel may be due to the MTR primary axis being perpendicular to the direction of the acoustic waves. As shown, when the axis of an MTR is aligned with the propagation direction of the acoustic waves (e.g., when the axis of the MTR is at an angle of 0 degrees relative to the direction of the acoustic waves), the time of travel is shortest. The systems and methods described herein leverage the impact of the MTRs on acoustic waves traveling therethrough to detect the presence of MTRs in material samples.

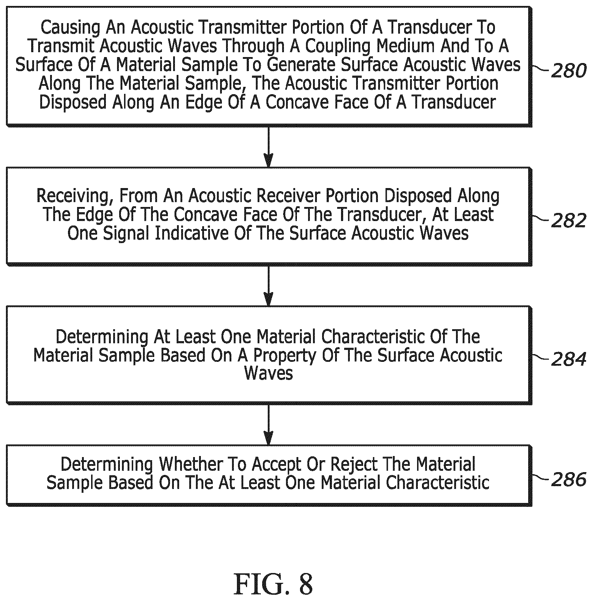

FIG. 8 is a flowchart of a method of inspecting a component in accordance with the approaches described herein. In some approaches, the method may be implemented using the inspection system 100 of FIG. 1, the inspection device 150 of FIG. 2A, and/or the inspection device 170 of FIG. 3A.

At block 280, the method includes causing an acoustic transmitter portion of a transducer to transmit acoustic waves through a coupling medium to a surface of the material sample. The acoustic transmitter portion of the transducer may be disposed adjacent to the edge of the concave face of the transducer. In some approaches, the transducer may be the transducer 106 described with reference to FIG. 1. For example, the control unit 128 causes the transducer 106 to transmit acoustic waves through the coupling medium 109 to the material sample 102. In some examples, the acoustic transmitter portion 157 of the transducer 152 of FIGS. 2A and 2B may transmit the acoustic waves to the material sample 102. Thus, the transducer used to execute the method of FIG. 8 may include the acoustic transmitter portion 157 and the acoustic receiver portion 158 in a single piezoelectric device. In yet another example, the acoustic transmitter portion 176 of the transducer 172 of FIGS. 3A and 3B may transmit the acoustic waves to the material sample 102. Thus, the transducer used to execute the method of FIG. 8 may also include the acoustic transmitter portion 176 and the acoustic receiver portion 178 as separate piezoelectric devices.

At block 282, the method includes receiving at least one signal indicative of the surface acoustic waves. An acoustic receiver portion of the transducer receives the surface acoustic waves and generates the signal indicative of the acoustic waves. The acoustic receiver may be disposed along the edge of the concave face of the transducer. For example, the transducer 106 may receive the acoustic waves and generate a signal that is received either indirectly or directly by the control unit 128. In some examples, the acoustic receiver portion 158 of the transducer 152 of FIGS. 2A and 2B may receive the acoustic waves and generate a signal indicative of such waves. In yet another example, the acoustic receiver portion 178 of the transducer 172 of FIGS. 3A and 3B may receive the acoustic waves and generate a signal indicative of such waves.

At block 284, the method includes determining at least one material characteristic of the material sample based on a property of the surface acoustic waves, for example, based on a property of the at least one signal indicative of the surface acoustic waves. In some approaches, a calculation device such as the calculation device 124 described with reference to FIG. 1 may determine the material characteristic based on the signal. For example, the calculation device 124 may determine the material characteristic based on the amplitude or arrival time of the signal. In some examples, the property of the surface acoustic wave may include at least one of the time of travel, signal amplitude, time sequence of signal amplitude, time of arrival, and/or position of the acoustic signals received by the acoustic receiver portion. In some examples, the property of the surface acoustic wave may include a geometric feature, such as size or aspect ratio, captured in a 2-dimensional or 3-dimensional representation of the surface acoustic wave response across the area of the material sample.

At block 286, the method includes determining whether to accept or reject the material sample based on the at least one material characteristic. In some examples, this operation is implemented by a calculation device, such as the calculation device 124. The calculation device 124 may compare the material characteristic to a threshold to determine whether to accept or reject the material sample. In one example, the calculation device 124 may determine whether the material sample falls above or below a threshold for MTR intensity to determine whether to accept or reject the material sample.

In some approaches, the method may further include causing a manufacturing system to adjust a parameter of a manufacturing process based at least in part on the at least one material characteristic. The manufacturing process may be a process that formed the material sample or that makes parts, components, or materials that have a material composition similar to that of the material sample. In this manner, the method of FIG. 8 may be used to provide manufacturing process feedback based on the material characteristics of the material sample and may adjust the manufacturing process (e.g., for an amount of material to be cropped at the end of a billet) to improve or optimize the manufacturing process. In some examples, this operation is implemented by the manufacturing system 129. For example, the control unit 128 may cause the manufacturing system 129 to adjust a parameter of the manufacturing system 129.

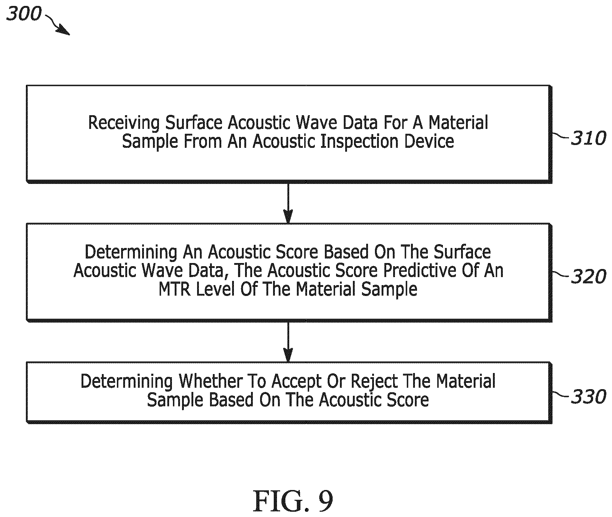

An additional exemplary inspection method is provided in FIG. 9. The method 300 uses surface acoustic wave data to evaluate a material sample. In particular, the method leverages an acoustic score that is predictive of one or more material characteristics, such as MTR characteristics, of the material sample to determine whether to accept or reject the material sample.

The surface acoustic wave data used in the method 300 may be acquired using one or more acoustic inspection systems or devices. The one or more acoustic inspection systems or devices may include, but are not limited to, the acoustic inspection systems or devices described herein. In one example, the inspection system 100 may be used to acquire the surface acoustic wave data.

At block 310, the method 300 includes receiving surface acoustic wave data for a material sample from an acoustic inspection device. In one example, the control unit 128 of FIG. 1 may receive surface acoustic wave data for the material sample 102 from the inspection device 104. In particular, the calculation device 124 of the control unit 128 may receive surface acoustic wave data. In some approaches, the surface acoustic wave data employed in the method of FIG. 9 includes one or more characteristics of an acoustic waveform (e.g., the acoustic signal received by a transducer of an acoustic inspection device). The surface acoustic wave data may include one or more parameters of the acoustic signal from a surface acoustic wave scan shown in FIG. 1, such as, the time of travel 112, signal amplitude 113, time sequence of signal amplitude 115, time of arrival 116, and/or position 117 of the acoustic signals received by the acoustic receiver portion.

In one non-limiting example, the surface acoustic wave data is acquired by causing acoustic waves to be transmitted from a transducer, having a concave face that includes one or more piezoelectric elements, through a coupling medium and to a surface of the material sample to produce surface acoustic waves along a portion of a surface of the material sample. The one or more piezoelectric elements may operate as at least one of an acoustic transmitter or an acoustic receiver. The surface acoustic wave data is further acquired by receiving the surface acoustic waves reflected from the surface of the material sample at the concave face.

At block 320, the method 300 includes determining an acoustic score based on the surface acoustic wave data. The acoustic score is a value or other parameter that is a predictor of an MTR level of the material sample. The MTR level may be any MTR characteristic, such as MTR size, shape, intensity, density, frequency, orientation, orientation spread, neighboring region characteristics, or volume fraction, or may be a value or other parameter derived from one or more MTR characteristics. In one example, the control unit 128 of FIG. 1 may determine the acoustic score based on the surface acoustic wave data. In particular, the calculation device 124 of the control unit 128 may determine the acoustic score. Exemplary methods for calculating or determining an acoustic score for a material sample based on the surface acoustic wave data of the material sample are described further below. It is contemplated that the acoustic score may be based on any statistical calculation using the surface acoustic wave data and the method 300 is not limited to the exemplary methods detailed below that use information entropy, such as Shannon or Rényi Entropy, or a Grey Level Co-Occurrence Matrix (*G*).

Described now are exemplary methods for determining an acoustic score for a material sample based on the surface acoustic wave data. The methods may be based on any statistical calculations, for example, standard deviation of time of travel for one or more areas of interest on the material sample, average of time of travel for one or more areas of interest on the material sample, maximum of time of travel for one or more areas of interest on the material sample, standard deviation of signal amplitude for one or more areas of interest on the material sample, average of amplitude for one or more areas of interest on the material sample, maximum of amplitude for one or more areas of interest on the material sample, spatial variation of temporal variation of time of travel for the material sample, spatial variation of temporal variation of signal amplitude for the material sample, Fourier sequence of time domain signal, or Fourier sequence for spatial representation of the amplitude and/or time of travel signals. Such statistical methods, as well as more complex methods of measuring signal variations, may be applicable to determining an acoustic score. A first exemplary method is based on the calculation of a Shannon Entropy (H). A second exemplary method is based on a Grey Level Co-Occurrence Matrix (*G*). It is contemplated that any suitable method for determining an acoustic score based on surface acoustic wave data may be employed. These methods may be applied to two-dimensional surface acoustic wave data or adapted to whole wave form surface acoustic wave data.

The surface acoustic wave data may include one or more characteristics of the acoustic signal received by a transducer of an acoustic inspection device, such as an amplitude, a time of travel, a time-series of amplitudes, or a spatially correlated arrangement of amplitudes or time of travel values. Values of the acoustic signal may be extracted from the ultrasonic waveform into a C-scan data matrix. Values of the acoustic signal may be recorded at various times during the signal. The C-scan data matrix is a spatially correlated representation of the structure of the material sample which may be represented as a two-dimensional matrix of data values. In one example, the spatially correlated representation may include time data (e.g., (x, y, time) data). The data values in the C-scan matrix represent information about material characteristics of the material sample. Data in the C-scan matrix can be visualized as an image, where each cell in the matrix corresponds to a particular location on the material sample. Grayscale or color values in the image correspond to the magnitude of the measured value of the signal characteristic.

Before calculating the acoustic score by a statistical method, the surface acoustic wave data (Y) may first be standardized or normalized. Standardizing or normalizing a set of surface acoustic wave data may include centering each point in the set about the mean, for example, by subtracting the mean from each point, and scaling each data point by the standard deviation. In one example, the surface acoustic wave data (*Y*) may be standardized according to the following equation:
$Y ′ = \frac{Y - μ}{σ}$
where *Y'* is the standardized surface acoustic wave data, *µ* is the mean of the surface acoustic wave data, and σ is the standard deviation of the surface acoustic wave data. Position and time series acoustic wave data may be standardized with separate methods. In one example, standardization of time series data may be based on comparison to a reference sample. After standardization, the standardized surface acoustic wave data (*Y*') may be further processed to correct outlying data points and to apply noise reduction. The standardized acoustic wave data (*Y*') may also be converted into an image with a number of discrete data levels. The image may indicate, for example, MTR levels at various positions on the cross-section of the material sample.

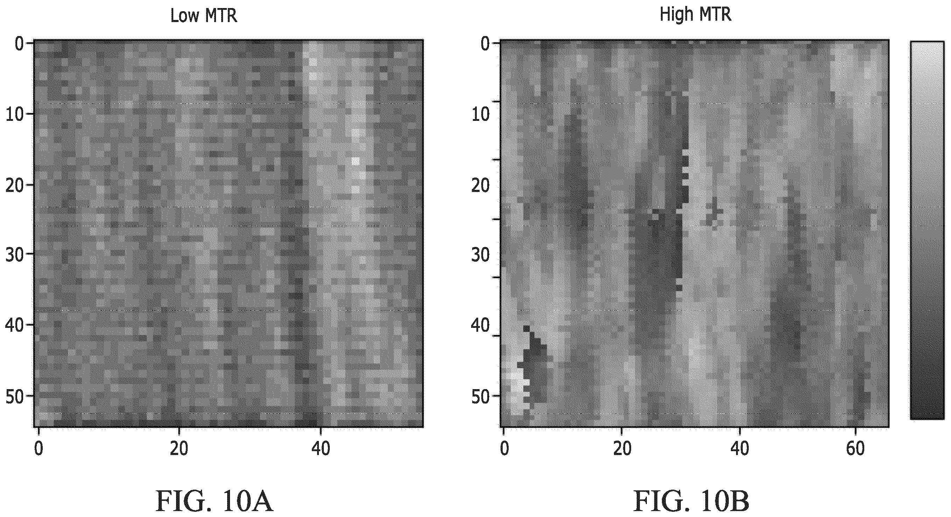

FIG. 10A is a C-scan image of standardized surface acoustic wave data (*Y*') for a material sample having a low MTR level. FIG. 10B is a C-scan image of standardized surface wave acoustic data (Y') for a material sample having a high MTR level. Areas with higher MTR levels have MTRs that are larger and more well aligned, while areas with lower MTR levels have MTRs that are smaller and are less well aligned.

In the first exemplary method, the acoustic score ( 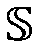 ) for a material sample is calculated or determined based on a measure of information entropy. One such measure may be calculated from Shannon Entropy (H). The Shannon Entropy (H) is calculated from the standardized surface acoustic wave data (Y'). The Shannon Entropy (H) may act as a measure of the uncertainty or randomness in the surface acoustic wave data. Other measures of entropy may also be used. One such additional example is Rényi Entropy.

In one example, the acoustic score ( 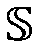 ) may be calculated via Shannon Entropy (H) may be calculated via the following equation:
$S = H \left(A\right) = - {\sum }_{i} {p}_{i} {logp}_{i} , i ∈ A$
where A is a region of the material sample or sub-region of the material sample over which data is collected, *pᵢ* is the probability that a point in area *A* has a value equal to the *i*th level in *Y*'. The acoustic score ( 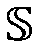 ) is calculated from the value of H for each area(s) in an acoustic scan performed by an acoustic inspection device.

In another example of an entropy measure, the acoustic score ( 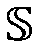 ) may be calculated via Rényi Entropy via the following equation:
$S = H \left(A, α\right) = \left(\frac{1}{1 - α}\right) log \left({p}_{i}^{α}\right) , α \neq \left[0, 1, ∞\right)$
where *α* is an arbitrary constant between 0 and ∞. For cases where *α =* 0, *α =* 1*, α* → ∞, *H*(*A, α*) may be evaluated by taking a limit. In the case of *α =* 1, the limit converges to the same metric as Shannon Entropy (H).

By correlating MTR values ( 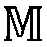 ) to acoustic scores ( 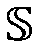 ) for a plurality of material samples, an inverse model can be built, as represented by the following equation:
$\hat{M} = f \left(S\right)$
where *M̂* is a predicted estimate of the MTR value (M), and f is a regression model built from MTR value ( 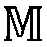 ) data and acoustic score ( 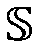 ) data obtained for a plurality of material samples. The MTR value ( 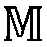 ) may be a measured value that is obtained via data collected from electron backscatter diffraction (EBSD) scans. In one non-limiting example, data from a field of view measuring about 10-15 mm x about 10-15mm is collected and a segmentation algorithm is used to define regions of the area of interest with similar orientation that correspond to MTRs. One of more of the approaches for segmenting MTRs (or determining an MTR value) from EBSD data described in the following papers, which are incorporated by reference, may be used: Venkatesh V, Noraas R, Pilchak A, Tamirisa S, Calvert K, Salem A, et al., Data driven tools and methods for microtexture classification and dwell fatigue life prediction in dual phase titanium alloys, MATEC Web Conf. 2020;321:11091; or Pilchak, A.L., Shank, J., Tucker, J.C. et al., A dataset for the development, verification, and validation of microstructure-sensitive process models for near-alpha titanium alloys, Integr. Mater. Manuf. Innov. 5, 259-276 (2016). Note, these two references describe relationships between a figure of merit or multiple figures of merit generated from characteristics of segmented MTRs and cold dwell fatigue capability. When considering relationships between MTR characteristics and acoustic responses, alternate figure(s) of merit and/or alternate MTR segmentation definitions, such as misorientation angle, size threshold, etc., may be more applicable. It should be noted that *M̂* can represent any of a variety of parameters depending on the goal of the given application.

In the second exemplary method, the acoustic score ( 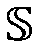 ) for a material sample is calculated or determined based on a Grey Level Co-Occurrence Matrix (*G*). The Grey Level Co-Occurrence Matrix (*G*) is calculated from the standardized surface acoustic wave data (*Y*'). The Grey Level Co-Occurrence Matrix (*G*) is a measure of the intensity relationships between a point P₁ = (*x*, *y*, *t*) and its neighbor P₂ = (x + Δ*x*, y + Δ*y*, *t*), where t is a time or times at which data is sampled. It is contemplated that this approach may be applied to raw surface wave acoustic data, standardized acoustic wave data, or other transformations of the acoustic wave data.

In one example, the Grey Level Co-Occurrence Matrix (G) is a square matrix whose values (*p_{i,j}*) contain the joint probability that P₁ has an intensity of *i* and P₂ has an intensity of *j*, as defined by the following equation: ${p}_{i , j} = \frac{1}{N} {\sum }_{x = 1} {\sum }_{y = 1} \left\{\begin{matrix}1 , & if Y ′ \left(x, y\right) = i and Y ′ \left(x+Δx,y+Δy\right) = j \\ 0 , & otherwise\end{matrix}\right. , \left(x, y\right) ∈ A$
where *N* is a constant that normalizes probabilities, A is a subset containing some or all of the data in *Y',* x and y are the coordinates of a point within a region A, Δx and Δy are specified distance offsets, and i and j are intensity levels of the data in *Y'.*

This second estimator of the acoustic score ( 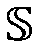 ) may be derived from joint probability *p_{i,j}* by the following equation:
$S = h \left({\sum }_{i} {\sum }_{j} {p}_{i , j} ∗ W \left(i, j\right)\right)$
where *W*(*i, j*) is a weight function based upon *i* and *j,* where one example would be *W*(*i, j*) *=* |*i - j*|. *h* is an adjustment function, where one example is a square root function such as $h \left(x\right) = \sqrt{x}$. From these acoustic score ( 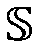 ) values, the procedure in the equation for M presented above can be repeated to build a similar regression model, as represented by the following equation:
$\hat{M} = {f}_{2} \left(S\right)$

In one other exemplary method, the acoustic score ( 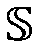 ) is a calculated value based on the size, shape, or aspect ratio of the features in the C-scan of amplitude data, time of travel data, or time series of amplitude data, and the statistical calculation, *fₙ* , continues to be any operation including basic statistics values, Shannon or Rényi Entropy, or Grey Level Co-Occurrence Matrix (GLCM) values.

Referring back to FIG. 9, at block 330, the method includes determining whether to accept or reject the material sample based on the acoustic score. The acoustic score may be the acoustic score ( 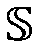 ) calculated by the methods and equations described above and in reference to FIGS. 10A and 10B. In one example, the control unit 128 of FIG. 1 may determine whether to accept or reject the material sample based on the acoustic score. In particular, the calculation device 124 of the control unit 128 may determine whether to accept or reject the material sample based on the acoustic score. The acoustic score may be compared to a threshold score or a threshold range to determine whether to accept or reject the material sample. The threshold score or threshold range may reflect acoustic score values that are acceptable. Acoustic scores that fall within a threshold range may reflect that the material from which the material sample has been acquired is suitable for use or further processing. If the acoustic score for the material sample is outside of a threshold range, the material sample may be rejected.

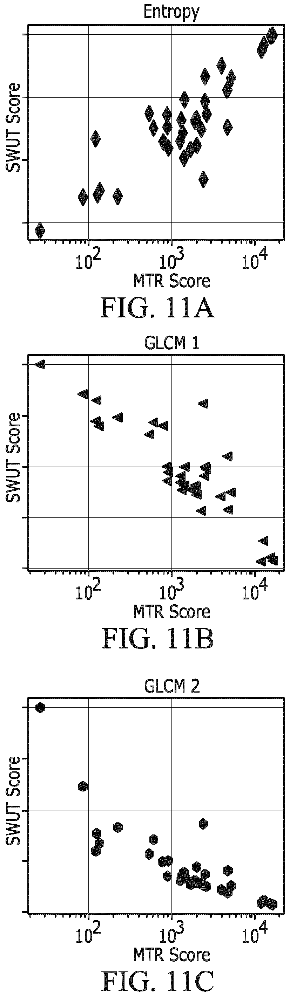

The acoustic score for a material sample may be predictive of an MTR value for the material sample. FIGS 11A-11C illustrate exemplary scatter plots correlating acoustic scores ( 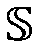 ) (also referred to as surface wave ultrasonic testing or SWUT scores) with MTR values ( 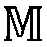 ) (also referred to as scores) for a plurality of material samples. The MTR values ( 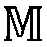 ) depicted in FIGS. 11A-11C were determined from EBSD testing performed on each of the plurality of material samples. The acoustic score ( 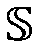 ) values depicted in FIGS. 11A-11C were determined for each of the plurality of material samples based on acoustic wave data (*Y*) for the respective material sample using the methods described herein. The scatter plots of FIGS. 11A- 11C validate the reliability of using an acoustic score determined by the methods described herein to predict an MTR value for a material sample. In FIG. 11A, the acoustic scores ( 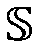 ) were determined using Shannon Entropy (*H*). In FIG. 11B, the acoustic scores ( 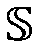 ) were determined using the Grey Level Co-Occurrence Matrix (*G*), applying a first weight function $W \left(i, j\right) = \frac{1}{1 + {\left(i-j\right)}^{2}}$ and adjustment function *h*(*x*) = *x*. In FIG. 11C, the acoustic scores ( 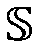 ) were determined using the Grey Level Co-Occurrence Matrix (*G*), applying a second weight function W(*i*, *j*) = 1 and *h*(*x*) = *h*(∑ ∑ *x*) = ∑ ∑ *x*². Numerous other weight and adjustment functions may also be used, depending upon the characteristics of the material sample and inspection system.

Further aspects of the disclosure are provided by the subject matter of the following clauses:
An inspection system comprising: a transducer having a concave face including one or more piezoelectric elements that operate as an acoustic transmitter and an acoustic receiver; a coupling medium filling a space between the transducer and a surface of a material sample; and a control unit in communication with the transducer, the control unit including at least one processor and at least one memory device, the at least one memory device storing instructions that when executed by the at least one processor cause the at least one processor to: cause the transducer to produce acoustic waves from the concave face such that the acoustic waves travel through the coupling medium, along a portion of the surface of the material sample, and are transmitted back to the concave face as surface acoustic waves; access data indicative of the surface acoustic waves received at the concave face; and determine at least one material characteristic of the material sample based on the data.

The inspection system of any preceding clause, wherein the at least one material characteristic includes one or more of a grain size, a grain structure, a grain orientation, a grain shape, a presence of a microtexture region, a size of a microtexture region, an intensity of a microtexture region, an orientation of a microtexture region, a macrotexture, dislocation content, and residual elastic compressive or tensile stresses of the material sample.

The inspection system of any preceding clause, wherein the concave face is a single piezoelectric element that switches between a transmit mode and a receive mode.

The inspection system of any preceding clause, wherein the concave face includes a first plurality of piezoelectric elements that operate as acoustic transmitters and a second plurality of piezoelectric elements spaced from first plurality of piezoelectric elements that operate as acoustic receivers; and wherein the acoustic waves travel in a single direction from the first plurality of piezoelectric elements to the second plurality of piezoelectric elements.

The inspection system of any preceding clause, wherein the coupling medium is water or another fluid couplant.

The inspection system of any preceding clause, wherein the transducer operates using frequencies between about 0.5 MHz and about 100 MHz.

The inspection system of any preceding clause, wherein the transducer operates by at least one of using a single center frequency and its associated bandwidth or by sweeping through a range of frequencies.

The inspection system of any preceding clause, wherein the concave face has a radius of curvature of between about 20 degrees and about 40 degrees.

The inspection system of any preceding clause, further including a mask coupled to the concave face of the transducer.

The inspection system of any preceding clause, wherein the at least one material characteristic is a characteristic of a microtexture region in a titanium alloy, a grain size in an alloy, or a texture region in a nickel alloy.

The inspection system of any preceding clause, further including a sensor to indicate a position of the transducer relative to the material sample.

The inspection system of any preceding clause, wherein the instructions, when executed, cause the at least one processor to cause the transducer to generate acoustic waves at a plurality of sound path angles.

The inspection system of any preceding clause, wherein the concave face is a hemispherical surface or a rectangular curved surface which is bounded by a peripheral edge, and wherein the peripheral edge of the concave face operates as at least one of the acoustic transmitter or the acoustic receiver.

An inspection method comprising: transmitting acoustic waves from a transducer having a concave face that includes one or more piezoelectric elements through a coupling medium and to a surface of a material sample to produce surface acoustic waves along a portion of a surface of the material sample, the one or more piezoelectric elements operating as an acoustic transmitter and an acoustic receiver; receiving the surface acoustic waves reflected from the surface of the material sample at the concave face; and determining at least one material characteristic of the material sample based on a property of the surface acoustic waves, the at least one material characteristic including one or more of a grain size, a grain orientation, a grain shape, a presence of a microtexture region, a size of a microtexture region, an intensity of a microtexture region, an orientation of a microtexture region, a macrotexture, dislocation content, and residual elastic compressive or tensile stresses.

The inspection method of any preceding clause, wherein the at least one material characteristic includes one or more of a grain size, a grain structure, a grain orientation, a grain shape, a presence of a microtexture region, a size of a microtexture region, an intensity of a microtexture region, an orientation of a microtexture region, a macrotexture, dislocation content, and residual elastic compressive or tensile stresses of the material sample.

The inspection method of any preceding clause, wherein the transmitting of the acoustic waves includes transmitting acoustic waves in a plurality of directions across the surface of the material sample at a single point.

The inspection method of any preceding clause, further comprising determining the at least one material characteristic of the material sample through statistical correlation based on the property of the surface acoustic waves.

The inspection method of any preceding clause, wherein the property of the surface acoustic wave includes a geometric feature captured in a 2-dimensional or 3-dimensional representation of the surface acoustic wave response across the area of the material sample.

The inspection method of any preceding clause, further comprising selecting at least one of a frequency or a propagation direction of the acoustic waves to optimize a response of a grain structure characteristic of the material sample.

The inspection method of any preceding clause, wherein the property of the surface acoustic waves includes at least one of a time of arrival, a time of travel, or an amplitude of the surface acoustic waves.

The inspection method of any preceding clause, wherein the at least one material characteristic is a grain structure of the material sample.

The inspection method of any preceding clause, further comprising determining whether to accept or reject the material sample based on the at least one material characteristic.

The inspection method of any preceding clause, further comprising causing a manufacturing system to adjust a parameter of a manufacturing process based on the at least one material characteristic.

An inspection method comprising: causing a transducer having a concave face including one or more piezoelectric elements that operate as an acoustic transmitter and an acoustic receiver to transmit acoustic waves from the concave face such that the acoustic waves travel through a coupling medium, along a portion of a surface of a material sample, and are transmitted back to the concave face as surface acoustic waves; accessing data indicative of the surface acoustic waves; determining at least one material characteristic of the material sample based on the data; and determining whether to accept or reject the material sample based on the at least one material characteristic.

The inspection method of any preceding clause, wherein the at least one material characteristic includes one or more of a grain size, a grain structure, a grain orientation, a grain shape, a presence of a microtexture region, a size of a microtexture region, an intensity of a microtexture region, an orientation of a microtexture region, a macrotexture, dislocation content, and residual elastic compressive or tensile stresses of the material sample.

The inspection method of any preceding clause, further comprising causing a manufacturing system to adjust a parameter of a manufacturing process based at least in part on the material characteristic.

An inspection method comprising: receiving surface acoustic wave data for a material sample from an acoustic inspection device; and determining an acoustic score that is predictive of a microtexture region (MTR) level of the material sample, the acoustic score being determined based on the surface acoustic wave data; and determining whether to accept or reject the material sample based on the acoustic score.

The inspection method of any preceding clause, wherein the material sample is at least a portion of a billet, a forging, or a fabricated part.

The inspection method of any preceding clause, further comprising: standardizing the surface acoustic wave data to obtain standardized surface acoustic wave data.

The inspection method of any preceding clause, wherein the acoustic score is determined based on a measure of information entropy that is determined based on the standardized surface acoustic wave data.

The inspection method of any preceding clause, wherein the acoustic score is determined based on a Shannon Entropy or Rényi Entropy that is determined based on the standardized acoustic wave data.

The inspection method of any preceding clause, wherein the acoustic score is determined based on a Grey Level Co-Occurrence Matrix (G) that is determined based on the standardized acoustic wave data.

The inspection method of any preceding clause, wherein the surface acoustic wave data is acquired by causing acoustic waves to be transmitted from the transducer having a concave face that includes one or more piezoelectric elements through a coupling medium and to a surface of the material sample to produce surface acoustic waves along a portion of a surface of the material sample, the one or more piezoelectric elements operating as an acoustic transmitter and an acoustic receiver; and receiving the surface acoustic waves transmitted from the surface of the material sample at the concave face.

The inspection method of any preceding clause, wherein the acoustic wave data includes a property of the surface acoustic waves, and wherein the property of the acoustic waves includes a geometric feature captured in a 2-dimensional or 3-dimensional representation of a surface acoustic wave response across an area of the material.

The inspection system of any preceding clause, wherein the concave face is a hemispherical surface or a rectangular curved surface bounded by a peripheral edge, and wherein the peripheral edge of the concave face operates as the acoustic transmitter and the acoustic receiver.

The inspection method of any preceding clause, further comprising: standardizing the surface acoustic wave data to obtain standardized surface acoustic wave data, wherein the acoustic score is determined based on a measure of information entropy that is determined based on the standardized surface acoustic wave data or a Grey Level Co-Occurrence Matrix (G) that is determined based on the standardized surface acoustic wave data.

The inspection system of any preceding clause, further including a mask that allows for selecting a direction or a sound path angle of acoustic waves from the transducer.

Further aspects of the invention are provided by the subject matter of the following clauses:
Clause 1. An inspection system (100) comprising: a transducer (106, 152, 172, 190) having a concave face (156, 174, 194) including one or more piezoelectric elements that operate as an acoustic transmitter and an acoustic receiver; a coupling medium (109) filling a space between the transducer (106, 152, 172, 190) and a surface of a material sample (102, 160, 180, 202); and a control unit (128) in communication with the transducer (106, 152, 172, 190), the control unit (128) including at least one processor and at least one memory (130) device, the at least one memory (130) device storing instructions that when executed by the at least one processor cause the at least one processor to: cause the transducer (106, 152, 172, 190) to produce acoustic waves (224, 226, 254) from the concave face (156, 174, 194) such that the acoustic waves (224, 226, 254) travel (112) through the coupling medium (109), along a portion of the surface of the material sample (102, 160, 180, 202), and are transmitted back to the concave face (156, 174, 194) as surface acoustic waves (224, 226, 254); access data (132) indicative of the surface acoustic waves (224, 226, 254) received at the concave face (156, 174, 194); and determine at least one material characteristic (126) of the material sample (102, 160, 180, 202) based on the data (132).
Clause 2. The inspection system (100) of clause 1, wherein the concave face (156, 174, 194) is a single piezoelectric element that switches between a transmitting mode and a receiving mode.
Clause 3. The inspection system (100) of clause 1, wherein the concave face (156, 174, 194) includes a first plurality of piezoelectric elements that operate as acoustic transmitters and a second plurality of piezoelectric elements spaced from first plurality of piezoelectric elements that operate as acoustic receivers; and wherein the acoustic waves (224, 226, 254) travel (112) in a single direction from the first plurality of piezoelectric elements to the second plurality of piezoelectric elements.
Clause 4. The inspection system (100) of any preceding clause, further including a mask (196) (165) (107) coupled to the concave face (156, 174, 194).
Clause 5. The inspection system (100) of any preceding clause, wherein the at least one material characteristic (126) includes one or more of a grain size, a grain structure, a grain orientation, a grain shape, a presence of a microtexture region, a size of a microtexture region, an intensity of a microtexture region, an orientation of a microtexture region, a macrotexture, dislocation content, and residual elastic compressive or tensile stresses of the material sample (102).
Clause 6. The inspection system (100) of any preceding clause, further including a sensor (179) to indicate a position (208A) (117) of the transducer (106, 152, 172, 190) relative to the material sample (102, 160, 180, 202).
Clause 7. The inspection system (100) of any preceding clause, wherein the instructions, when executed, cause the at least one processor to cause the transducer (106, 152, 172, 190) to generate acoustic waves (224, 226, 254) at a plurality of sound path angles.
Clause 8. The inspection system (100) of any preceding clause, wherein the concave face (156, 174, 194) is a hemispherical surface or a rectangular curved surface bounded by a peripheral edge (159), and wherein the peripheral edge (159) of the concave face (156, 174, 194) operates as the acoustic transmitter and the acoustic receiver.
Clause 9. An inspection method comprising: transmitting acoustic waves (224, 226, 254) from transducer (106, 152, 172, 190) having a concave face (156, 174, 194) that includes one or more piezoelectric elements through a coupling medium (109) and to a surface of a material sample (102, 160, 180, 202) to produce surface acoustic waves (224, 226, 254) along a portion of a surface of the material sample (102, 160, 180, 202), the one or more piezoelectric elements operating as an acoustic transmitter and an acoustic receiver; receiving the surface acoustic waves (224, 226, 254) reflected from the surface of the material sample (102, 160, 180, 202) at the concave face (156, 174, 194); and determining at least one material characteristic (126) of the material sample (102, 160, 180, 202) based on a property of the surface acoustic waves (224, 226, 254).
Clause 10. The inspection method of clause 9, wherein the transmitting of the acoustic waves (224, 226, 254) includes transmitting acoustic waves (224, 226, 254) in a plurality of directions across the surface of the material sample (102, 160, 180, 202) at a single point.
Clause 11. The inspection method of any one of clauses 9-10, further comprising determining the at least one material characteristic (126) of the material sample (102, 160, 180, 202) through statistical correlation based on the property of the surface acoustic waves (224, 226, 254).
Clause 12. The inspection method of any one of clauses 9-11, further comprising selecting at least one of a frequency or a propagation direction of the acoustic waves (224, 226, 254) to optimize a response of a grain structure characteristic of the material sample (102, 160, 180, 202).
Clause 13. The inspection method of any one of clauses 9-12, wherein the property of the surface acoustic waves (224, 226, 254) includes at least one of a time of arrival (116), a time of travel (112), or an amplitude of the surface acoustic waves (224, 226, 254).
Clause 14. The inspection method of any one of clauses 9-13, wherein the property of the surface acoustic waves (224, 226, 254) includes a geometric feature captured in a 2-dimensional or 3-dimensional representation of a surface acoustic wave response across an area of the material sample (102, 160, 180, 202).
Clause 15. The inspection method of any one of clauses 9-14, the at least one material characteristic (126) including one or more of a grain size, a grain structure, a grain orientation, a grain shape, a presence of a microtexture region, a size of a microtexture region, an intensity of a microtexture region, an orientation of a microtexture region, a macrotexture, dislocation content, and residual elastic compressive or tensile stresses of the material sample (102).

## Claims

1. An inspection method, comprising:
receiving surface acoustic wave data (Y) for a material sample (102, 160, 180, 202) from an acoustic inspection device (104);
standardizing the surface acoustic wave data (Y) to obtain standardized surface acoustic wave data (Y');
determining an acoustic score ( 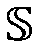 ) that is predictive of a microtexture region (MTR) level of the material sample (102, 160, 180, 202), the acoustic score ( 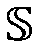 ) being determined based on a measure of information entropy that is determined based on the standardized surface acoustic wave data (Y') or a Grey Level Co-Occurrence Matrix (G) that is determined based on the standardized surface acoustic wave data (Y'); and
determining whether to accept or reject the material sample (102, 160, 180, 202) based on the acoustic score ( 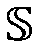 ).

2. The inspection method of claim 1, wherein the measure of information entropy is a Shannon Entropy (H) or a Rényi Entropy.

3. The inspection method of claim 1 or claim 2, wherein standardizing the surface acoustic wave data (Y) includes centering each point in the surface acoustic wave data (Y) about a mean and scaling each point by a standard deviation.

4. The inspection method of any one of claims 1 to 3, wherein the MTR level includes one or more of MTR size, MTR shape, MTR intensity, MTR density, MTR frequency, MTR orientation, MTR orientation spread, neighboring region characteristics, or MTR volume fraction.

5. The inspection method of any one of claims 1 to 4, wherein the material sample (102, 160, 180, 202) is at least a portion of a billet, a forging, or a fabricated part.

6. **The inspection** method of any one of claims 1 to 5, wherein the surface acoustic wave data (Y) includes at least one of a time of travel (112), a signal amplitude (113), a time sequence of signal amplitude (115), a time of arrival (116), or a position (117).

7. The inspection method of any one of claims 1 to 6, wherein the surface acoustic wave data (Y) is extracted from an ultrasonic waveform into a C-scan data matrix, the C-scan data matrix being a spatially correlated representation of the material sample (102, 160, 180, 202).

8. The inspection method of any one of claims 1 to 7, wherein the surface acoustic wave data (Y) includes a geometric feature captured in a 2-dimensional or 3-dimensional representation of a surface acoustic wave response across an area of the material sample (102, 160, 180, 202).

9. The inspection method of any one of claims 1 to 8, further comprising:
correlating MTR values ( 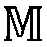 ) to acoustic scores ( 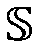 ) for a plurality of material samples to build a regression model (f); and
determining a predicted MTR value estimate (M̂) for the material sample (102, 160, 180, 202) based on the acoustic score ( 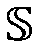 ) and the regression model (f).

10. The inspection method of any one of claims 1 to 9, wherein determining whether to accept or reject the material sample (102, 160, 180, 202) includes comparing the acoustic score ( 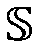 ) to a threshold score or a threshold range.

11. The inspection method of any one of claims 1 to 10, wherein the surface acoustic wave data (Y) is acquired by:
causing acoustic waves (224, 226, 254) to be transmitted from a transducer (106, 152, 172, 190) having a concave face (156, 174, 194) that includes one or more piezoelectric elements through a coupling medium (109) and to a surface of the material sample (102, 160, 180, 202) to produce surface acoustic waves along a portion of the surface of the material sample (102, 160, 180, 202), the one or more piezoelectric elements operating as an acoustic transmitter and an acoustic receiver; and
receiving the surface acoustic waves reflected from the surface of the material sample (102, 160, 180, 202) at the concave face (156, 174, 194).

12. The inspection method of claim 11, wherein the concave face (156, 174, 194) is a hemispherical surface or a rectangular curved surface bounded by a peripheral edge (159), and wherein the peripheral edge (159) of the concave face (156, 174, 194) operates as the acoustic transmitter and the acoustic receiver.

13. The inspection method of claim 11 or claim 12, wherein the transducer (106, 152, 172, 190) transmits the acoustic waves (224, 226, 254) at a plurality of sound path angles at a single point on the surface of the material sample (102, 160, 180, 202).

14. The inspection method of any one of claims 1 to 13, further comprising causing a manufacturing system (129) to adjust a parameter of a manufacturing process based at least in part on the MTR level of the material sample (102, 160, 180, 202).

15. An inspection system (100), comprising:
a control unit (128) including at least one processor (136) and at least one memory (130) device, the at least one memory (130) device storing instructions that when executed by the at least one processor (136) cause the at least one processor (136) to:
receive surface acoustic wave data (Y) for a material sample (102, 160, 180, 202) from an acoustic inspection device (104);
standardize the surface acoustic wave data (Y) to obtain standardized surface acoustic wave data (Y');
determine an acoustic score ( 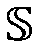 ) that is predictive of a microtexture region (MTR) level of the material sample (102, 160, 180, 202), the acoustic score ( 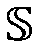 ) being determined based on a measure of information entropy that is determined based on the standardized surface acoustic wave data (Y') or a Grey Level Co-Occurrence Matrix (G) that is determined based on the standardized surface acoustic wave data (Y'); and
determine whether to accept or reject the material sample (102, 160, 180, 202) based on the acoustic score ( 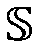 ).
